# EUROPEAN PATENT APPLICATION

(11) **EP 1 821 460 A2**
(43) Date of publication of application: **22.08.2007**
(21) Application number: 07010631.5
(22) Date of filing: 30.04.2004
(51) Int. Cl.: H04L 12/28, H04L 12/56, H04Q 7/32, H04J 11/00, H04Q 7/38

(54) **Controlling the sleep mode and awake mode in a wireless communication system**

(30) Priority: 30.04.2003 KR 20030027836
(62) Divisional of application: 04010315.2
(71) Applicant: Samsung Electronics Co., Ltd, Suwon-si, Gyeonggi-do 443-742 (KR)
(72) Inventor: Son, Yeong-Moon, Suwon-si Gyeonggi-do (KR); Koo, Chang-Hoi, Suwon-si Gyeonggi-do (KR); Kim, So-Hyun, Suwon-si Gyeonggi-do (KR); Son, Jung-Je, Suwon-si Gyeonggi-do (KR)
(74) Representative: Grünecker, Kinkeldey, Stockmair & Schwanhäusser Anwaltssozietät

(57) **Abstract**

A broadband wireless access communication system having a sleep and an awake mode. A subscriber station controls the sleep mode upon receiving a denial response of a base station to a sleep request from the subscriber station to the base station. If the denial response from the base station is received, the subscriber station retransmits a sleep request to the base station after a lapse of waiting duration. If the denial response from the base station is received, the subscriber station holds retransmission of a sleep request to the base station until an unsolicited response to the sleep request is received from the base station.

## Description

### BACKGROUND OF THE INVENTION

### 1. Field of the Invention

The present invention relates generally to a broadband wireless access communication system, and in particular, to a system and method for controlling a sleep mode and an awake mode in a broadband wireless access communication system employing Orthogonal Frequency Division Multiplexing (OFDM).

### 2. Description of the Related Art

In a 4^{th} generation (4G) communication system, active research is being conducted on technology for providing users with services guaranteeing various qualities of service (QoSs) at a data rate of about 100 Mbps. The current 3^{rd} generation (3G) communication system generally supports a data rate of about 384 Kbps in an outdoor channel environment with a relatively poor channel environment, and supports a data rate of a maximum of 2 Mbps even in an indoor channel environment having a relatively good channel environment. Alternatively, a wireless local area network (LAN) system and a wireless metropolitan area network (MAN) system generally support a data rate of 20 Mbps to 50 Mbps.

Accordingly, in the current 4G communication system, active research is being conducted out on a new communication system efficient securing mobility and high QoS for the wireless LAN system and the wireless MAN system supporting a relatively high data rate in order to support high-speed services that the 4G communication system is intended to provide.

Due to its broad service coverage and high data rate, the wireless MAN system is suitable for high-speed communication services. However, because the mobility of a user, or a subscriber station (SS), is not taken into consideration, a handoff, or cell selection, caused by fast movement of the subscriber station is also not considered in the system.

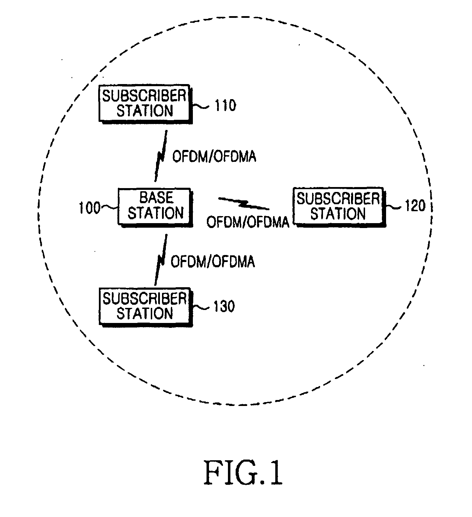

FIG 1 is a diagram schematically illustrating a configuration of a conventional broadband wireless access communication system employing Orthogonal Frequency Division Multiplexing (OFDM)/Orthogonal Frequency Division Multiple Access (OFDMA) (hereinafter referred to as "OFDM/OFMDA broadband wireless access communication system"). More specifically, FIG 1 is a diagram schematically illustrating a configuration of an IEEE 802.16a communication system.

However, before a description of FIG 1 is given, it should be noted that the wireless MAN system is a broadband wireless access (BWA) communication system, and has broader service coverage and supports a higher data rate than the wireless LAN system. The IEEE 802.16a communication system is a communication system employing OFDM and OFDMA in order to support a broadband transmission network to a physical channel of the wireless MAN system.

That is, the IEEE 802.16a communication system is an OFDM/OFDMA broadband wireless access communication system. The IEEE 802.16a communication system, which applies OFDM/OFDMA to the wireless MAN system, transmits a physical channel signal using a plurality of subcarriers, thereby making it possible to support high-speed data communication.

Alternatively, an IEEE 802.16e communication system has the same characteristics as the IEEE 802.16a communication system, but also considers mobility of a subscriber station. However, no specification has yet been proposed for the IEEE 802.16e communication system.

Because the IEEE 802.16e communication system takes mobility of a subscriber station into account, it will be assumed herein that the subscriber station (SS) refers to a mobile station (MS) or a mobile subscriber station (MSS). That is, the MS or MSS refers to an SS to which mobility is given.

Referring to FIG 1, the IEEE 802.16a communication system has a single-cell configuration, and comprises a base station (BS) 100 and a plurality of subscriber stations (SSs) 110, 120, and 130 controlled by the base station 100. Signal exchange between the base station 100 and the subscriber stations 110, 120, and 130 is performed using the OFDM/OFDMA technology.

As described above, the IEEE 802.16a communication system currently considers only a state in which subscriber stations are fixed, i.e., the mobility of subscriber stations is never considered, and considers only a single-cell configuration. However, as described above, the IEEE 802.16e communication system considers mobility of a subscriber station in addition to characteristics of the IEEE 802.16a communication system. Therefore, the IEEE 802.16e communication system must consider mobility of a subscriber station in a multicell environment. In order to consider the mobility of a subscriber station in a multicell environment, operations of the subscriber station and a base station must be modified inevitably. However, the IEEE 802.16e communication system has not proposed any method for handling the multicell environment and the mobility of a subscriber station.

In the IEEE 802.16e communication system, when the mobility of a subscriber station is taken into consideration, power consumption of the subscriber station is an important factor in managing the entire system resources. Therefore, a sleep mode operation and a corresponding awake mode operation between a subscriber station and a base station for minimizing the power consumption of the subscriber station have been proposed.

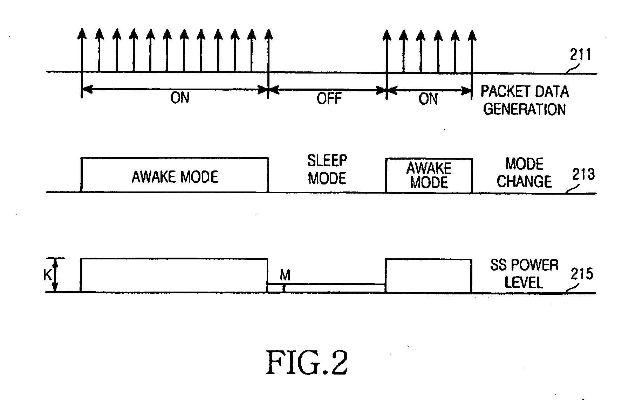

FIG 2 is a diagram schematically illustrating a sleep mode operation proposed in a conventional IEEE 802.16e communication system. Before a description of FIG 2 is given, it should be noted that the sleep mode has been proposed to minimize power consumption of a subscriber station in an idle interval where no packet data is transmitted. That is, in the sleep mode, a subscriber station and a base station both transition to the sleep mode in order to minimize power consumption of the subscriber station in an idle interval where no packet data is transmitted.

Because packet data is generally generated on a burst basis, it is unlikely that an interval where the packet data is not transmitted is identical in operation to an interval where the packet data is transmitted. Therefore, the sleep mode has been proposed.

However, if the subscriber station in the sleep mode has packet data to be exchanged with the base station, the subscriber station must transition to an awake mode to exchange the packet data with the base station.

Such a sleep mode operation has been proposed as a plan for minimizing power consumption and interference between channel signals. However, because a characteristic of the packet data is chiefly affected by traffic, the sleep mode operation must be adaptively performed in consideration of a traffic characteristic and a transmission scheme of the packet data.

Referring to FIG 2, reference numeral 211 denotes a pattern of packet data generated, which comprises a plurality of ON intervals and OFF intervals. The ON intervals are burst intervals where packet data, or traffic, is generated, and the OFF intervals are idle intervals where no traffic is generated.

A subscriber station transitions to a sleep mode or an awake mode according to the traffic generation pattern, thereby minimizing power consumption of the subscriber station and reducing interference between channel signals.

Reference numeral 213 denotes a state transition (or mode transition) pattern of a base station, which comprises a plurality of awake modes and sleep modes. The awake modes refer to states in which traffic is generated, and in these states, actual packet data transmission/reception between a base station and a subscriber station is performed. Conversely, the sleep modes refer to states in which no traffic is generated, and in these states, no packet data transmission/reception between a base station and a subscriber station is performed.

Reference numeral 215 denotes a pattern of a power level of a subscriber station (SS POWER LEVEL), and as illustrated, if a power level of the subscriber station for the awake mode is defined as 'K', a power level of the subscriber station for the sleep mode becomes 'M'. Comparing the power level K of the subscriber station for the awake mode with the power level M of the subscriber station for the sleep mode, the M value is much smaller than the K value. That is, in the sleep mode, very little power is consumed because no transmission/reception of packet data is performed.

A description will now be made herein below of schemes currently proposed in the IEEE 802.16e communication system in order to support the sleep mode operation. However, before a description of the schemes currently proposed in the IEEE 802.16e communication system is given, the following preconditions will be described.

In order to transition to a sleep mode, a subscriber station must receive a state transition approval from a base station, and the base station permits the base station to transition to the sleep mode and then transmits packet data.

In addition, the base station must inform the subscriber station that there is packet data to be transmitted to the subscriber station for a listening interval of the subscriber station. At this point, the subscriber station must awake from a sleep mode and determine whether there is packet data to be transmitted from the base station to the subscriber station itself. A detailed description of the "listening interval" will be made herein below.

If it is determined that there is packet data to be transmitted from the base station to the subscriber station itself, the subscriber station transitions to the awake mode to receive packet data from the base station. However, if it is determined that there is no packet data to be transmitted from the base station to the subscriber station itself, the subscriber station can return to the sleep mode or hold the awake mode.

### A. Operation Parameters

A description will now be made of parameters necessary for supporting the sleep mode and awake mode operations.

### (1) Sleep Interval

The sleep interval is requested by a subscriber station, and assigned by a base station at the request of the subscriber station. The sleep interval represents a time interval from a time when the subscriber station transitions to a sleep mode to a time when the subscriber station transitions back to an awake mode. As a result, the sleep interval is defined as a time for which the subscriber station stays in a sleep mode.

The subscriber station can continuously stay in a sleep mode even after the sleep interval. In this case, the subscriber station updates the sleep interval by performing an exponentially increasing algorithm using a predetermined minimum window (MIN-WINDOW) or maximum window (MAX-WINDOW). The minimum window value is a minimum value of the sleep interval, and the maximum window value is a maximum value of the sleep interval. In addition, the minimum window value and the maximum window value are represented by a number of frames, and a base station assigns both. These values will be described in more detail herein below.

### (2) Listening Interval

The listening interval is requested by a subscriber station, and assigned by a base station at the request of the subscriber station. The listening interval represents a time interval for which the subscriber station receives downlink messages, such as a traffic indication (TRF_IND) message, in synchronism with a downlink signal from the base station after it awoke from a sleep mode for a short while. The traffic indication message is a traffic message to be transmitted to the subscriber station (i.e., a message indicating presence of packet data), and a detailed description thereof will be made later on. The subscriber station determines whether it will stay in the awake mode or transition back to the sleep mode, according to a value of the traffic indication message.

### (3) Sleep Interval Update Algorithm

If the subscriber station transitions to a sleep mode, it determines a sleep interval by regarding a predetermined minimum window value as a minimum sleep mode cycle. After a lapse of the sleep interval, the subscriber station awakes from the sleep mode for the listening interval to determine whether there is packet data to be transmitted from the base station. If it is determined that there is no packet data to be transmitted from the base station, the subscriber station sets the sleep interval to a value two times longer than a previous sleep interval, and continuously stays in the sleep mode.

For example, when the minimum window value is `2', the subscriber station sets the sleep interval to 2 frames, and then stays in a sleep mode for the 2 frames. After a lapse of the 2 frames, the subscriber station awakes from the sleep mode and determines whether the traffic indication message is received. If it is determined that the traffic indication message is not received, i.e., if it is determined that there is no packet data transmitted from the base station to the subscriber station, the subscriber station sets the sleep interval to 4 frames, i.e., two times the original 2 frames, and then stays in a sleep mode for the 4 frames.

Accordingly, the sleep interval is increased from the minimum window value up to the maximum window value, and an algorithm for updating the sleep interval becomes the sleep interval update algorithm.

### B. Operation Messages

A description will now be made of messages currently defined in the IEEE 802.16e communication system in order to support the sleep mode and awake mode operations.

### (1) Sleep Request (SLP_REQ) Message

The sleep request message is transmitted from a subscriber station to a base station, and used by the subscriber station in making a state transition request to a sleep mode. The sleep request message includes parameters, or information elements (IEs), needed by the subscriber station to operate in a sleep mode, and the sleep request message has a format as illustrated in Table 1 below.

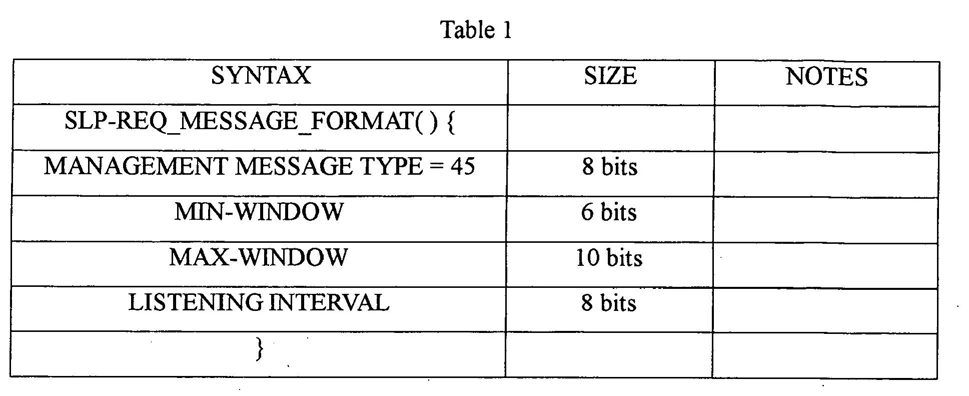

The sleep request message is a dedicated message, which is transmitted on the basis of a connection identifier (CID) of a subscriber station.

More specifically, MANAGEMENT MESSAGE TYPE is information indicating a type of a current transmission message, and MANAGEMENT MESSAGE TYPE = 45 indicates the sleep request message. A value of MIN-WINDOW indicates a start value requested for the sleep interval (measured in frames), and a value of MAX-WINDOW indicates a stop value requested for the sleep interval (measured in frames). That is, as described in connection with the sleep interval update algorithm, the sleep interval can be updated within a value between the minimum window (MIN-WINDOW) value to the maximum window (MAX-WINDOW) value. Additionally, LISTENING INTERVAL indicates a requested listening interval (measured in frames). The LISTENING INTERVAL is also represented by a frame value.

### (2) Sleep Response (SLP_RSP) Message

The sleep response message is a response message to the sleep request message, and indicates whether to approve or deny a state transition to a sleep mode requested by the subscriber station, or indicates an unsolicited instruction. That is, the sleep response message serves not only as a response message to the sleep request message, but also as an unsolicited instruction message that can be transmitted even without reception of the sleep request message.

A detailed description of the sleep response message used as a message indicating the unsolicited instruction will be made with more detail herein below. The sleep response message includes information elements needed by the subscriber station to operate in a sleep mode. The sleep response message has a format as shown in Table 2 below.

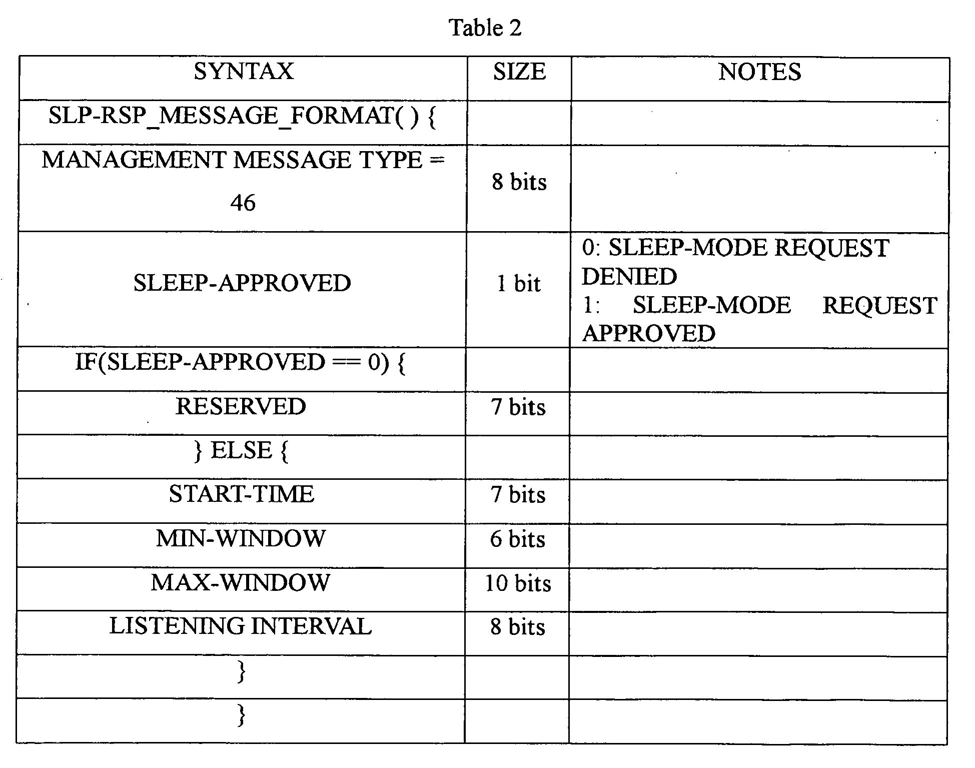

The sleep response message is also a dedicated message, which is transmitted on the basis of a connection ID of the subscriber station.

The MANAGEMENT MESSAGE TYPE is information indicating a type of a current transmission message, and MANAGEMENT MESSAGE TYPE = 46 indicates the sleep response message. A value of SLEEP-APPROVED is expressed with 1 bit, and SLEEP-APPROVED = 0 indicates that a transition request to a sleep mode is denied (SLEEP-MODE REQUEST DENIED), while SLEEP-APPROVED = 1 indicates that a transition request to a sleep mode is approved (SLEEP-MODE REQUEST APPROVED). Also, for SLEEP-APPROVED = 0, there is a 7-bit RESERVED field, and for SLEEP-APPROVED = 1, there are a 7-bit START-TIME field, a 6-bit MIN-WINDOW field, a 10-bit MAX-WINDOW field and an 8-bit LISTENING INTERVAL field.

Here, a value of START-TIME indicates the number of frames required until the subscriber station enters a first sleep interval, excluding a frame for which the sleep response message was received. That is, the subscriber station makes a state transition to a sleep mode after a lapse of frames corresponding to the START-TIME value beginning at the next frame of the frame for which the sleep response message was received.

Additionally, a value of MIN-WINDOW indicates a start value for the sleep interval (measured in frames), and a value of MAX-WINDOW indicates a stop value for the sleep interval (measured in frames). LISTENING INTERVAL indicates a value for LISTENING INTERVAL (measured in frames).

### (3) Traffic Indication (TRF_IND) Message

The traffic indication message is transmitted to a subscriber station by a base station for the LISTENING INTERVAL, and is used to indicate presence of packet data to be transmitted to the subscriber station by the base station. The traffic indication message has a format as shown in Table 3 below.

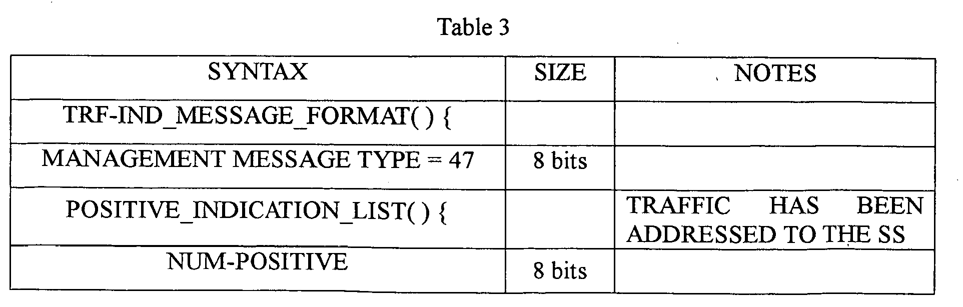

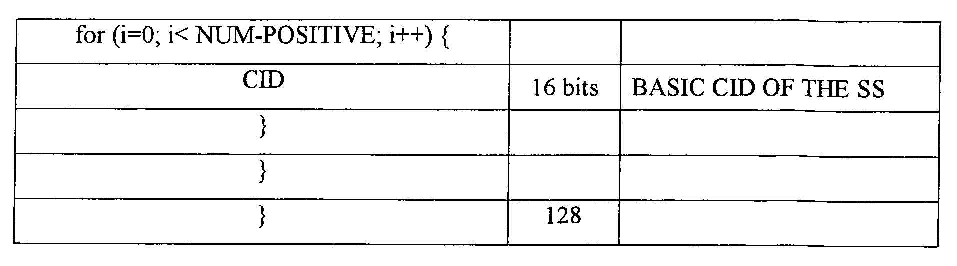

The traffic indication message, unlike the sleep request message and the sleep response message, is a broadcasting message transmitted on a broadcasting basis. The traffic indication message is a message indicating a presence or absence of packet data to be transmitted from the base station to a particular subscriber station, and the subscriber station decodes the broadcasted traffic indication message for the LISTENING INTERVAL and determines whether to transition to an awake mode or hold the sleep mode.

If the subscriber station determines to transition to an awake mode, the subscriber station analyzes frame synchronization. If the analyzed frame sequence number is not identical to an expected frame sequence number, the subscriber station can make a retransmission request for lost packet data in the awake mode. However, if the subscriber station fails to receive the traffic indication message for the LISTENING INTERVAL, or if the traffic indication message, though it is received, does not include POSITIVE INDICATION, the subscriber station returns to the sleep mode.

The MANAGEMENT MESSAGE TYPE is information indicating a type of a current transmission message, and MANAGEMENT MESSAGE TYPE = 47 indicates the traffic indication message. POSITIVE_INDICATION_LIST includes the number NUM-POSITIVE of positive subscribers, and a connection ID (CID) of each of the positive subscribers. That is, the POSITIVE_INDICATION_LIST indicates the number of subscribers to which packet data is to be transmitted, and their connection IDs.

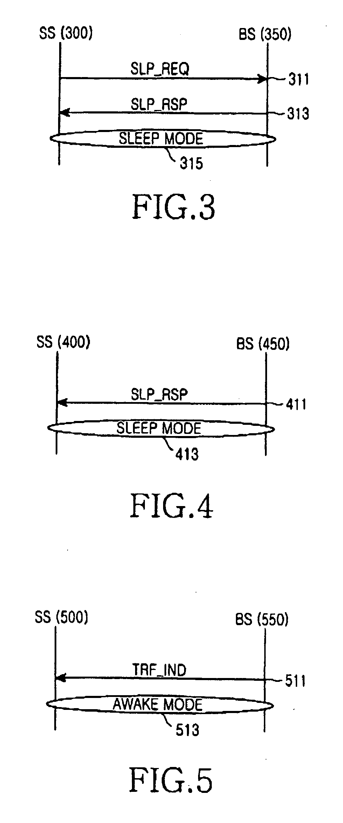

FIG 3 is a signal flow diagram illustrating a procedure for transitioning to a sleep mode by a subscriber station at the request of the subscriber station, proposed in a conventional IEEE 802.16e communication system. Referring to FIG 3, a subscriber station 300 transmits a sleep request message to a base station 350 when it desires to transition to a sleep mode in step 311. The sleep request message includes the information elements described in connection with Table 1. Upon receiving the sleep request message from the subscriber station 300, the base station 350 determines whether to permit the subscriber station 300 to transition to a sleep mode, taking conditions of the subscriber station 300 and the base station 350 into consideration, and transmits a sleep response message to the subscriber station 300 according to the determination result in step 313.

Here, the base station 350 determines whether to permit the subscriber station 300 to transition to a sleep mode, taking the presence/absence of packet data to be transmitted to the subscriber station 300 into consideration. As described in conjunction with Table 2, if the base station 350 determines to approve a state transition to a sleep mode, it sets SLEEP-APPROVED to '1', whereas if the base station 350 determines to deny a state transition to a sleep mode, it sets SLEEP-APPROVED to '0'. The information elements included in the sleep response message are illustrated in Table 2.

Upon receiving the sleep response message from the base station 350, the subscriber station 300 analyzes a value of SLEEP-APPROVED included in the received sleep response message, and if it is analyzed that the subscriber station 300 is permitted to make a state transition to a sleep mode, the subscriber station 300 makes a state transition to a sleep mode in step 315. However, if a value of SLEEP-APPROVED included in the sleep response message indicates a denial of a state transition to a sleep mode, the subscriber station 300 holds a current mode, i.e., an awake mode.

In addition, as the subscriber station 300makes a state transition to a sleep mode, it reads corresponding information elements from the sleep response message and performs a corresponding sleep mode operation.

FIG 4 is a signal flow diagram illustrating a procedure for transitioning to a sleep mode by a subscriber station under the control of a base station, proposed in a conventional IEEE 802.16e communication system. However, before a description of FIG 4 is given, it should be noted that the IEEE 802.16e communication system proposes a method of using the sleep response message as a message indicating an unsolicited instruction. Here, the "unsolicited instruction" means that a subscriber station operates under the instruction, or control, of a base station even though there is no separate request from the subscriber station, and in an example of FIG 4, the subscriber station makes a state transition to a sleep mode according to the unsolicited instruction.

Referring to FIG 4, a base station 450 transmits a sleep response message, or an unsolicited instruction message, to a subscriber station 400 in step 411. The sleep response message includes the information elements described in conjunction with Table 2. Upon receiving the sleep response message from the base station 450, the subscriber station 400 analyzes a value of SLEEP-APPROVED included in the received sleep response message, and if the value of SLEEP-APPROVED indicates an approval of a state transition to a sleep mode, the subscriber station 400 makes a state transition to a sleep mode in step 413.

In FIG 4, because the sleep response message is used as an unsolicited instruction message, the SLEEP-APPROVED value is expressed only with '1'. In addition, as the subscriber station 400 transitions to a sleep mode, it reads corresponding information elements from the sleep response message and performs a corresponding sleep mode operation.

FIG. 5 is a signal flow diagram illustrating a procedure for transitioning to an awake mode by a subscriber station under the control of a base station, proposed in a conventional IEEE 802.16e communication system. Referring to FIG 5, if traffic, or packet data, to be transmitted to a subscriber station 500 is generated, a base station 550 transmits a traffic indication message to the subscriber station 500 in step 511.

Here, the traffic indication message includes the information elements described in connection with Table 3. Upon receiving the traffic indication message from the base station 550, the subscriber station 500 determines whether POSITIVE INDICATION exists in the traffic indication message. If the POSITIVE INDICATION exists, the subscriber station 500 reads a connection ID included in the traffic indication message and determines whether the read connection ID is identical to its own connection ID. If it is determined that the connection ID included in the traffic indication message is identical to its own connection ID, the subscriber station 500 transitions from the current mode, i.e., sleep mode, to an awake mode in step 513.

### C. Operation Drawbacks

Above, a description has been made of sleep mode operations proposed in the current IEEE 802.16e communication system. Next, drawbacks of the above-described sleep mode operations will be described herein below.
(1) When a subscriber station makes a state transition request to a sleep mode, a base station must inform the base station whether to approve the state transition request. In this case, if there is data to be transmitted to the subscriber station, the base station can prevent (or deny) the subscriber station from making a state transition to the sleep mode. Then the transition-denied subscriber station continuously holds an awake mode, causing unnecessary power consumption by the subscriber station. Therefore, when a transition request to a sleep mode of the subscriber station is denied, an additional operation for enabling the subscriber station to transition to a sleep mode and an algorithm therefor are necessary.
(2) The subscriber station sends a state transition request to an awake mode to the base station each time it detects transmission data while it operates in the sleep mode. In response, the base station should be able to deny the state transition request to an awake mode of the subscriber station for the following reasons.
   - Efficient Utilization of Base Station's Capacity: The base station can previously prevent an excess of base station's capacity.
   - Load Balancing on Subscriber Station's Traffic: The base station suppresses a transition to an awake mode of a subscriber station having a high packet transmission rate to the base station, thereby increasing packet transmission opportunities of other subscriber stations.
   - Reliable Traffic Transmission by Subscriber Station in Awake Mode (QoS Guaranteed): The base station suppresses a transition to an awake mode by a subscriber station with relatively lower priority, thereby giving more packet data transmission opportunities to a subscriber station with higher priority.
   However, the existing system has not specifically defined a method for denying the state transition request and an operation that must be performed after the denial. Therefore, a subscriber station, after a state transition to an awake mode was denied, continuously stays in a sleep mode undesirably.
   In addition, as long as there is a packet to be transmitted to the base station, the subscriber station must send a state transition request back to an awake mode to the base station, and to this end, the base station is required to inform the subscriber station how to appropriately re-request a state transition to an awake mode according to a condition of the base station.
   The subscriber station can request a transition to an awake mode in order to transmit a control packet necessary for bandwidth allocation between the base station and the subscriber station. In this case, the base station must approve a transition to an awake mode of the subscriber station in order to guarantee reliable transmission of a user data packet.
   For that purpose, in order for an existing subscriber station to request a transition to an awake mode, a field for distinguishing a type of transmission packet (e.g., a control packet), which can be a cause of the transition to an awake mode, must be inserted into a message transmitted to the base station.
(3) Because a subscriber station, after a transition to a sleep mode of which was approved, unconditionally transitions to a sleep mode, a control packet may be lost or may fail to be transmitted at an appropriate time, thereby affecting actual transmission of a user data packet.
   Therefore, if the subscriber station must transmit a control packet or an urgent user data packet to the base station in a state where the base station requested the subscriber station to transition to a sleep mode, the subscriber station should be able to deny the request of the base station. For that purpose, it is necessary to define a new message and an operation after the denial.
(4) When the base station requests a subscriber station staying in a sleep mode to transition to an awake mode, the subscriber station should be able to deny the request of the base station according to its remaining battery power. If current battery power of the subscriber station is almost exhausted such that no more packet transmission/reception is available, the subscriber station should be able to deny the transition request to an awake mode of the base station.

Despite such problems, there has been no specific definition of an appropriate operating procedure for denying a mode transition request.

### SUMMARY OF THE INVENTION

It is, therefore, an object of the present invention to provide a method for performing an appropriate operation by a transmission side when a reception side denies a state transition request made by the transmission side in a sleep mode control system for a broadband wireless access communication system.

It is another object of the present invention to provide a control method and system for denying a state transition request to a sleep mode of a subscriber station in a broadband wireless access communication system.

It is further another object of the present invention to provide a control method and system for denying a state transition request to an awake mode of a subscriber station in a broadband wireless access communication system.

According to a first aspect of the present invention, there is provided a method for controlling a sleep mode by a subscriber station in an awake mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of: if a denial response of the base station to a sleep request from the subscriber station to the base station is received, retransmitting the sleep request to the base station after a lapse of waiting duration; or if a denial response of the base station to the sleep request from the subscriber station to the base is received, holding retransmission of the sleep request to the base station until an unsolicited response to the sleep request is received from the base station.

According to a second aspect of the present invention, there is provided a method for controlling a sleep mode by a base station, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of: if a denial response of the subscriber station to a sleep request from the base station to the subscriber station is received, retransmitting a sleep request to the subscriber station after a lapse of waiting duration; or if a denial response of the subscriber station to a sleep request from the base station to the subscriber station is received, holding retransmission of the sleep request to the subscriber station until an unsolicited response to the sleep request is received from the subscriber station.

According to a third aspect of the present invention, there is provided a method for controlling an awake mode by a subscriber station, upon transmitting a traffic indication for indicating a presence of traffic data to be transmitted from the subscriber station to the base station, while the subscriber station is in a sleep mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of: if a denial response of the base station to a traffic indication from the subscriber station to the base station is received, retransmitting the traffic indication to the base station after a lapse of waiting duration; or if a denial response from the base station to a traffic indication from the subscriber station to the base station is received, holding retransmission of the traffic indication until an unsolicited response to the traffic indication is received from the base station.

According to a fourth aspect of the present invention, there is provided a method for controlling an awake mode by a subscriber station upon receiving a traffic indication for indicating a presence of traffic data to be transmitted from a base station to the subscriber station, while the subscriber station is in a sleep mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of receiving the traffic indication transmitted together with a connection identifier (ID) of the subscriber station by the base station; determining whether to approve a transition to the awake mode, considering a resource condition of the subscriber station; and transmitting the determination result to the base station.

According to a fifth aspect of the present invention, there is provided a system for controlling a transition to a sleep mode from an awake mode, in a broadband wireless access communication system utilizing the sleep mode for minimizing power consumption in an absence of data to be exchanged, and the awake mode for enabling communication in a presence of data to be exchanged, comprising: a base station; and a subscriber station, wherein, if the base station receives a transition request to the sleep mode from the subscriber station, the base station transmits a denial response by transmitting waiting duration information to allow the subscriber station to retransmit the transition request to the sleep mode after a lapse of a waiting duration; and wherein, if the subscriber station receives the transition request to the sleep mode of the subscriber station from the base station, the subscriber station transmits a denial response by transmitting waiting duration information to allow the base station to retransmit a transition request to the sleep mode after a lapse of a waiting duration.

According to a sixth aspect of the present invention, there is provided a system for controlling a transition to an awake mode from a sleep mode, in a broadband wireless access communication system utilizing the sleep mode for minimizing power consumption in an absence of data to be exchanged, and the awake mode for enabling communication in a presence of data to be exchanged, comprising: a base station; and
a mobile station, wherein, if the base station receives a traffic indication for indicating a presence of a transmission packet from the subscriber station, the base station transmits a denial response by transmitting waiting duration information to allow the subscriber station to retransmit the traffic indication after a lapse of a waiting duration; and wherein if the subscriber station receives a traffic indication including a connection identifier (ID) of the subscriber station from the base station, the subscriber station determines whether to approve a transition to the awake mode, considering a resource condition thereof, and transmits the determination result to the base station.

According to a seventh aspect of the present invention, there is provided a system for controlling a transition to a sleep mode from an awake mode, in a broadband wireless access communication system utilizing the sleep mode for minimizing power consumption in an absence of data to be exchanged, and the awake mode for enabling communication in a presence of data to be exchanged, comprising: a base station; and a subscriber station, wherein the base station, upon receiving a transition request to the sleep mode of the subscriber station, transmits a denial response by allowing the subscriber station not to transmit a sleep request until a response to the transition request to the sleep mode is re-received; and wherein the subscriber station, upon receiving a transition request to the sleep mode of the subscriber station from the base station, transmitting a denial response by allowing the base station not to transmit a sleep request until a response to the transition request to the sleep mode is re-received.

According to a eighth aspect of the present invention, there is provided a system for controlling a transition to an awake mode from a sleep mode, in a broadband wireless access communication system utilizing the sleep mode for minimizing power consumption in an absence of data to be exchanged, and the awake mode for enabling communication in a presence of data to be exchanged, comprising: a system for controlling a transition to an awake mode from a sleep mode, in a broadband wireless access communication system utilizing the sleep mode for minimizing power consumption in an absence of data to be exchanged, and the awake mode for enabling communication in a presence of data to be exchanged, comprising: a base station; and a mobile station, wherein, if the base station receives a traffic indication indicating presence of a transmission packet from the subscriber station, the base station transmits a denial response by allowing the subscriber station not to transmit a traffic indication until a response to the traffic indication is re-received; and wherein if the subscriber station receives a traffic indication including a connection identifier (ID) of the subscriber station from the base station, the subscriber station determines whether to approve a transition to the awake mode considering a resource condition thereof, and transmits the determination result to the base station.

### BRIEF DESCRIPTION OF THE DRAWINGS

The above and other objects, features, and advantages of the present invention will become more apparent from the following detailed description when taken in conjunction with the accompanying drawings in which:
FIG 1 is a diagram schematically illustrating a configuration of a conventional OFDM/OFDMA broadband wireless access communication system;
FIG 2 is a diagram schematically illustrating a sleep mode operation proposed in a conventional IEEE 802.16e communication system;
FIG 3 is a signal flow diagram illustrating a procedure for transitioning to a sleep mode by a subscriber station at the request of the subscriber station, proposed in a conventional IEEE 802.16e communication system;
FIG 4 is a signal flow diagram illustrating a procedure for transitioning to a sleep mode by a subscriber station under the control of a base station, proposed in a conventional IEEE 802.16e communication system;
FIG 5 is a signal flow diagram illustrating a procedure for transitioning to an awake mode by a subscriber station under the control of a base station, proposed in a conventional IEEE 802.16e communication system;
FIG 6 is a diagram schematically illustrating a configuration of an OFDM/OFDMA broadband wireless access communication system according to an embodiment of the present invention;
FIG 7 is a signal flow diagram schematically illustrating a state transition procedure to a sleep mode at the request of a subscriber station in an IEEE 802.16e communication system according to an embodiment of the present invention;
FIG 8 is a signal flow diagram schematically illustrating a state transition procedure to a sleep mode at the request of a base station in an IEEE 802.16e communication system according to an embodiment of the present invention;
FIG 9 is a signal flow diagram schematically illustrating a state transition procedure to an awake mode at the request of a subscriber station in an IEEE 802.16e communication system according to an embodiment of the present invention;
FIG 10 is a signal flow diagram schematically illustrating a state transition procedure to an awake mode at the request of a base station in an IEEE 802.16e communication system according to an embodiment of the present invention;
FIG 11 is a signal flow diagram illustrating a state transition procedure to a sleep mode at the request of a subscriber station in an IEEE 802.16e communication system according to an embodiment of the present invention;
FIG 12 is a signal flow diagram illustrating a state transition procedure to a sleep mode at the request of a base station in an IEEE 802.16e communication system according to an embodiment of the present invention;
FIG 13 is a signal flow diagram illustrating a state transition procedure to an awake mode at the request of a subscriber station to transmit a data packet in an IEEE 802.16e communication system according to an embodiment of the present invention;
FIG 14 is a signal flow diagram illustrating a state transition procedure to an awake mode at the request of a subscriber station to transmit a control packet in an IEEE 802.16e communication system according to an embodiment of the present invention;
FIG 15 is a signal flow diagram illustrating a state transition procedure to an awake mode at the request of a base station in an IEEE 802.16e communication system according to an embodiment of the present invention;
FIG 16 is a flowchart illustrating a state transition procedure to a sleep mode at the request of a subscriber station according to an embodiment of the present invention;
FIG 17 is a flowchart illustrating a state transition procedure to a sleep mode at the request of a base station according to an embodiment of the present invention; and
FIG 18 is a flowchart illustrating a state transition procedure to an awake mode at the request of a subscriber station according to an embodiment of the present invention.

### DETAILED DESCRIPTION OF THE PREFERRED EMBODIMENT

Several preferred embodiments of the present invention will now be described in detail herein below with reference to the annexed drawings. In the following description, a detailed description of known functions and configurations incorporated herein has been omitted for conciseness.

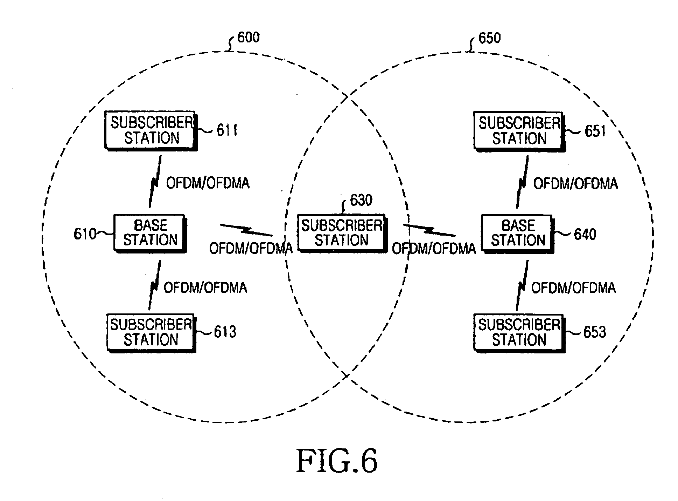

FIG 6 is a diagram schematically illustrating a configuration of an OFDM/OFDMA broadband wireless access communication system according to an embodiment of the present invention. However, before a description of FIG 6 is given, it should be noted that as stated in the related art section, an IEEE 802.16e communication system considers mobility of a subscriber station (SS) in addition to having the same characteristics as an IEEE 802.16a communication system, but no specification has been proposed for the communication system.

In order to consider mobility of a subscriber station in addition to characteristics of the IEEE 802.16a communication system, the IEEE 802.16e communication system can consider a multicell configuration and handoff of a subscriber station between multiple cells. Therefore, the present invention proposes a configuration of an IEEE 802.16e communication system as illustrated in FIG 6. Further, the IEEE 802.16e communication system is a broadband wireless access (BWA) communication system employing Orthogonal Frequency Division Multiplexing (OFDM) and Orthogonal Frequency Division Multiple Access (OFDMA) (hereinafter, referred to as "OFDM/OFDMA broadband wireless access communication system"), and for the convenience of explanation, it will be assumed in FIG 6 that the OFDM/OFDMA broadband wireless access communication system is an example of the IEEE 802.16e communication system.

Referring to FIG 6, the IEEE 802.16e communication system has a multicell configuration, (i.e., cells 600 and 650), and comprises a base station (BS) 610 for controlling the cell 600, a base station 640 for controlling the cell 650, and a plurality of subscriber stations 611, 613, 630, 651, and 653.

Signal exchange between the base stations 610 and 640 and their associated subscriber stations 611, 613, 630, 651, and 653 is performed using the OFDM/OFDMA technology. Among the subscriber stations 611, 613, 630, 651, and 653, the subscriber station 630 is located in a boundary region, or a handoff region, between the cells 600 and 650. Therefore, the IEEE 802.16e communication system should support handoff of the subscriber station 630 in order to support mobility of the subscriber station 630.

Herein, because operations for supporting handoff in the IEEE 802.16a communication system that does not support handoff are not directly related to the present invention, a detailed description thereof will be omitted.

As described in connection with FIG 6, because the IEEE 802.16e communication system must consider mobility of a subscriber station in addition to characteristics of the IEEE 802.16a communication system, power consumption of the subscriber station is as an important factor of the entire system. Therefore, a sleep mode operation and a corresponding awake mode operation between a subscriber station and a base station have been proposed to minimize the power consumption of the subscriber station. However, the sleep mode operation and awake mode operation proposed in the current IEEE 802.16e communication system has the three problems described in the related art section. Therefore, the present invention proposes a sleep mode operation control system and method for resolving the three problems.

### I. Proposed Operation Messages

A description will now be made of messages proposed by the present invention to support a sleep mode operation and an awake mode operation described above.

### (1) Sleep Request (SLP_REQ Message

The sleep request message is transmitted from a subscriber station to a base station, in order for the subscriber station to make a state transition request to a sleep mode. Further, the sleep request message is transmitted from the base station to the subscriber station, in order for the base station to allow the subscriber station to make a state transition request to a sleep mode. The sleep request message includes parameters, or information elements (IEs), needed by the subscriber station to operate in a sleep mode, and the sleep request message has a format as illustrated in Table 4 below.

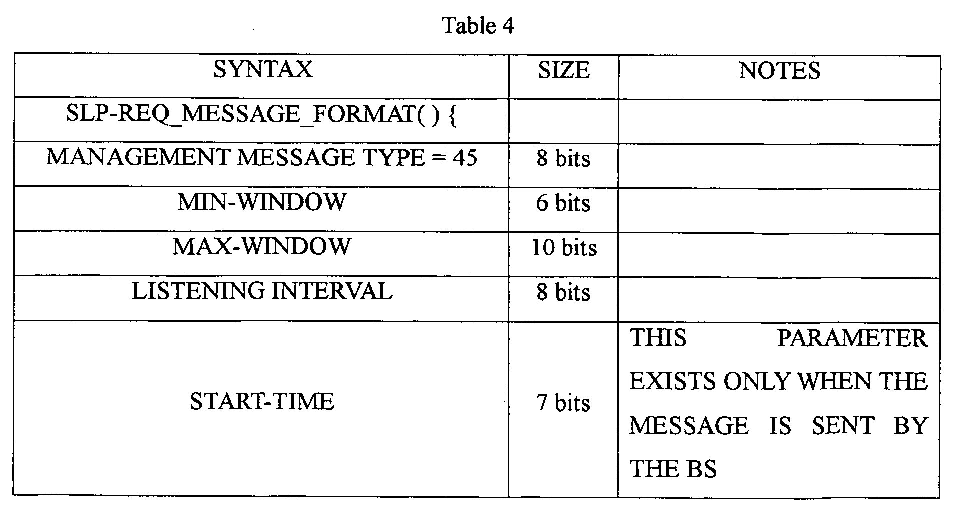

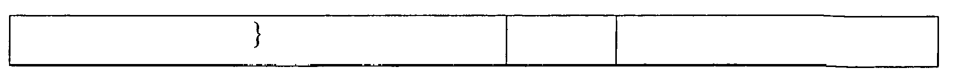

Referring to Table 4, the sleep request message according to an embodiment of the present invention is identical to the sleep request message described in connection with Table 1 except a START-TIME field is further added thereto.

The 7-bit START-TIME value added to the sleep request message is included only in a message transmitted from a base station to a subscriber station (i.e., a sleep request message requested by a base station), and is an optional information element (not included in the sleep request message requested by the subscriber station) transmitted from the subscriber station to the base station.

The START-TIME value can also be defined as a mandatory information element included in both the sleep request message requested by the base station and the sleep request message requested by the subscriber station.

A sleep response message to the sleep request message, proposed in an embodiment of the present invention, is related to a detailed state transition denial operation described later, and will be described with reference to Table 10.

The other common parameters in Table 4 have been described in connection with Table 1 and therefore, will not be described again herein.

### (2) Traffic Indication (TRF_IND) Message

The traffic indication message has different message characteristics according to a subject that transmits the traffic indication message. For example, if a subject that transmits the traffic indication message is a base station, the traffic indication message becomes a broadcasting message that is transmitted to a plurality of subscriber stations on a broadcasting basis. However, if a subject that transmits the traffic indication message is a subscriber station, the traffic indication message becomes a dedicated message that is transmitted from the base station to the subscriber station on a one-to-one, or unicasting, basis.

That is, the traffic indication message is differently defined in its message name and format according to its transmission subject. Herein, a traffic indication message transmitted from the base station to the subscriber station is defined as a base station traffic indication (BSTRF_IND) message, and a traffic indication message transmitted from the subscriber station to the base station is defined as a subscriber station traffic indication (SSTRF_IND) message. The base station traffic indication message and the subscriber station traffic indication message will now be described with reference to Table 5 and Table 6, respectively.

The base station traffic indication message has a format as shown in Table 5 below.

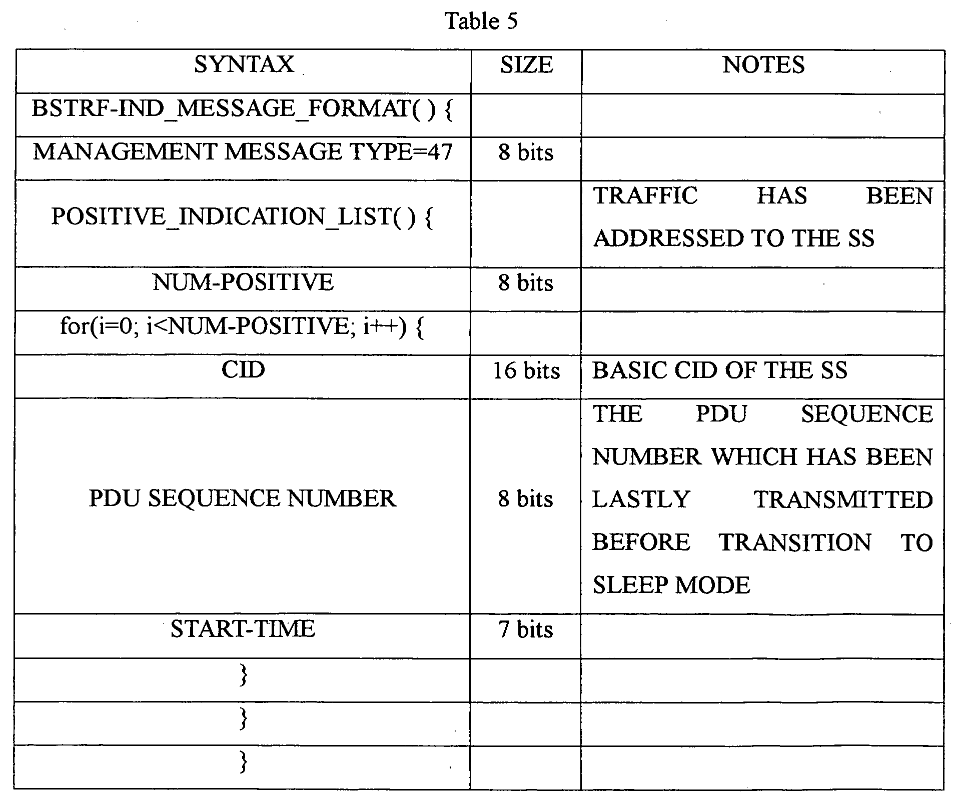

The base station traffic indication message, as stated above, is a broadcasting message. Referring to Table 5, the base station traffic indication message is identical to the traffic indication message described in conjunction with Table 3 except a PDU SEQUENCE NUMBER parameter and a START-TIME parameter are added thereto.

The PDU SEQUENCE NUMBER parameter represents a PDU (Packet Data Unit) sequence number that the base station has lastly transmitted before a state transition to a sleep mode. A value of the START-TIME parameter indicates the number of frames required until the subscriber station enters an awake mode, excluding a frame for which the base station traffic indication message was received.

When the subscriber station transitions from the sleep mode to the awake mode, if the subscriber station has lost packet data by detecting lost packet data without a separate sequence reordering procedure, using the PDU sequence number included in the base station traffic indication message, then the subscriber station sends a retransmission request for the lost packet data to the base station.

The other common parameters of Table 5 have been described in connection with Table 3 and therefore, will not be described again herein.

Next, the subscriber station traffic indication message has a format as shown in Table 6 below.

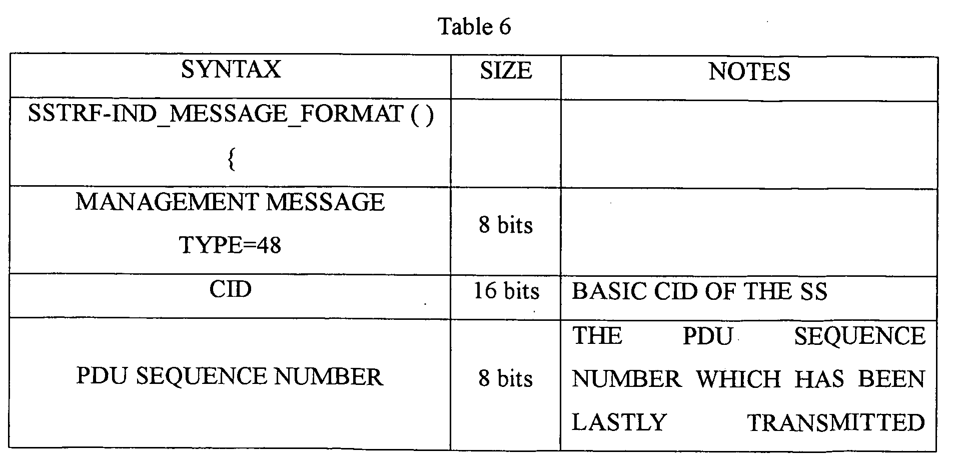

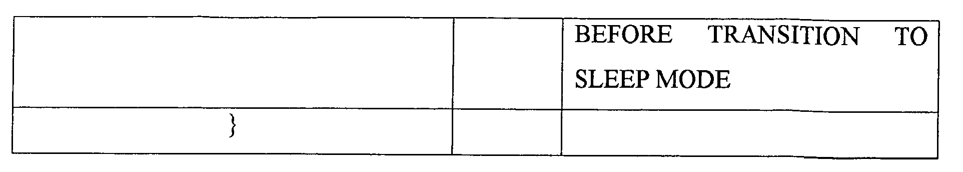

Referring to Table 6, unlike the base station traffic indication message, the subscriber station traffic indication message is not a broadcasting message, but a unicasting message that is transmitted on the basis of a connection ID of the subscriber station.

That is, the subscriber station traffic indication message is a message indicating a presence of packet data that the base station will receive from the subscriber station. Upon receiving the subscriber station traffic indication message, the base station decodes the received subscriber station traffic indication message and determines whether it will allow the subscriber station to transition to an awake mode or to continuously stay in the sleep mode.

The subscriber station traffic indication message is identical to the traffic indication message described in conjunction with Table 3 except a connection ID (CID) parameter and a PDU SEQUENCE NUMBER parameter are added thereto.

The CID parameter indicates a connection ID of the subscriber station that transmits the subscriber station traffic indication message, and the PDU SEQUENCE NUMBER parameter represents a PDU sequence number that the subscriber station has lastly transmitted before transitioning to a sleep mode.

The other common parameters of Table 6 have been described in connection with Table 3 and therefore, will not be described again herein.

### (3) Traffic Confirm (TRF_CFN) Message

The traffic confirm message is differently defined in its message name and format according to its transmission subject. Herein, a traffic confirm message transmitted from a base station to a subscriber station is defined as a base station traffic confirm (BSTRF_CFN) message, and a traffic confirm message transmitted from the subscriber station to the base station is defined as a subscriber station traffic confirm(SSTRF_CFN) message.

The subscriber station traffic confirm message has a format as shown in Table 7 below.

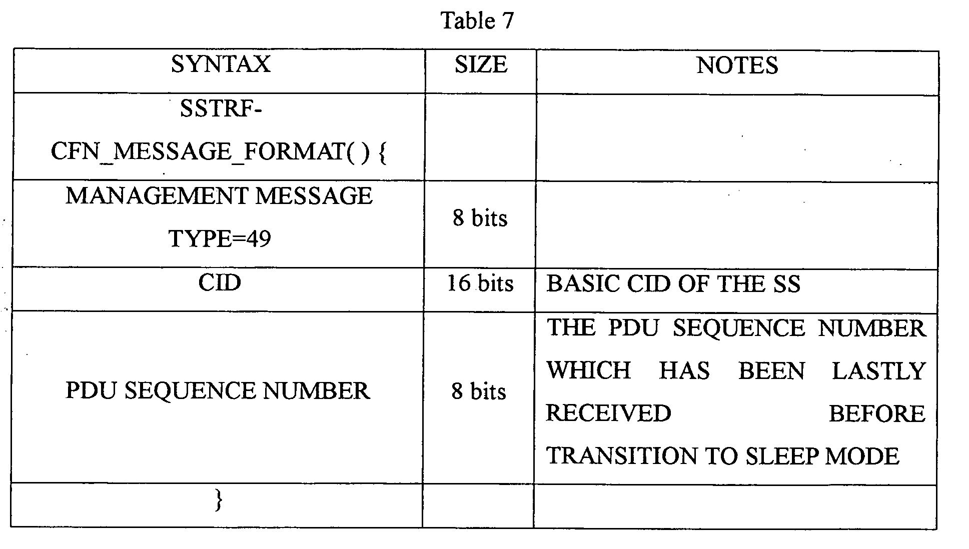

In Table 7, MANAGEMENT MESSAGE TYPE is information indicating a type of a current transmission message, and MANAGEMENT MESSAGE TYPE = 49 indicates the subscriber station traffic confirm message. CID represents a connection ID of a subscriber station that transmits the subscriber station traffic confirm message. In addition, PDU SEQUENCE NUMBER represents a PDU sequence number that the subscriber station has lastly received before transitioning to a sleep mode.

When a PDU sequence number included in the base station traffic indication message is different from a PDU sequence number included in the subscriber station traffic confirm message, the base station defines a preceding PDU sequence number out of the two PDU sequence numbers as a valid PDU sequence number, and resumes transmission from the packet data corresponding to the valid PDU sequence number.

The base station traffic confirm message has a format as shown in Table 8 below.

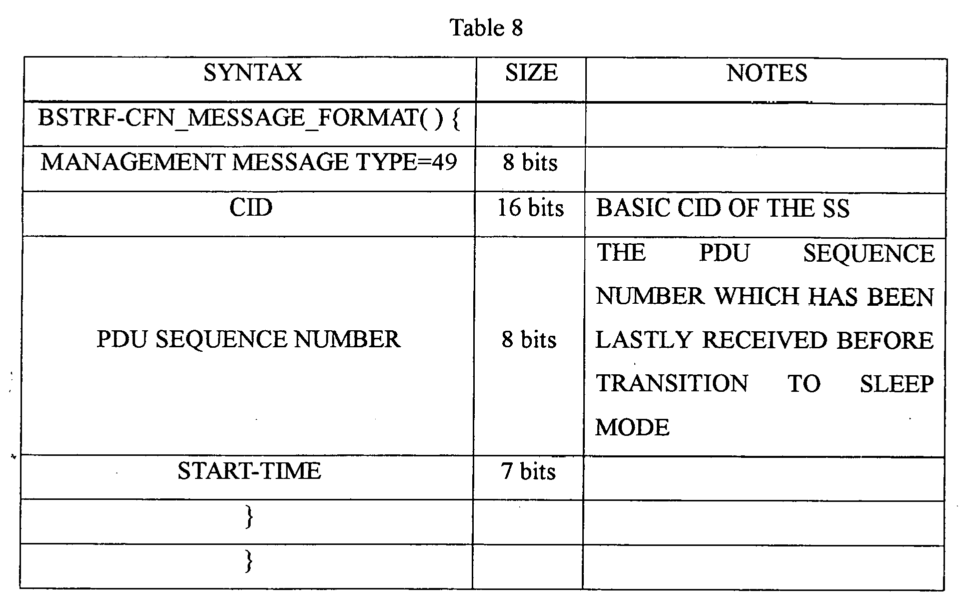

In Table 8, MANAGEMENT MESSAGE TYPE is information indicating a type of a current transmission message, and MANAGEMENT MESSAGE TYPE = 49 indicates the base station traffic confirm message. CID represents a connection ID of a subscriber station that transmits the base station traffic confirm message. In addition, PDU SEQUENCE NUMBER represents a PDU sequence number that the base station has lastly received before transitioning to a sleep mode.

When a PDU sequence number included in the subscriber station traffic indication message is different from a PDU sequence number included in the base station traffic confirm message, the subscriber station defines a preceding PDU sequence number out of the two PDU sequence numbers as a valid PDU sequence number, and resumes transmission from the packet data corresponding to the valid PDU sequence number.

In addition, a value of a START-TIME parameter indicates the number of frames required until the subscriber station enters an awake mode, excluding a frame for which the base station traffic confirm message was received. That is, the subscriber station transitions to an awake mode after a lapse of frames corresponding to the START-TIME value beginning at the next frame of the frame for which the base station traffic confirm message was received.

The START-TIME value is included only in the base station traffic confirm message transmitted from the base station to the subscriber station, and is an optional information element that is not included in the subscriber station traffic confirm message transmitted from the subscriber station to the base station. The START-TIME value can also be defined as a mandatory information element included in both the base station traffic confirm message and the subscriber station traffic confirm message.

The format of the base station traffic confirm message described in conjunction with Table 8 can be modified into a format as shown in Table 9.

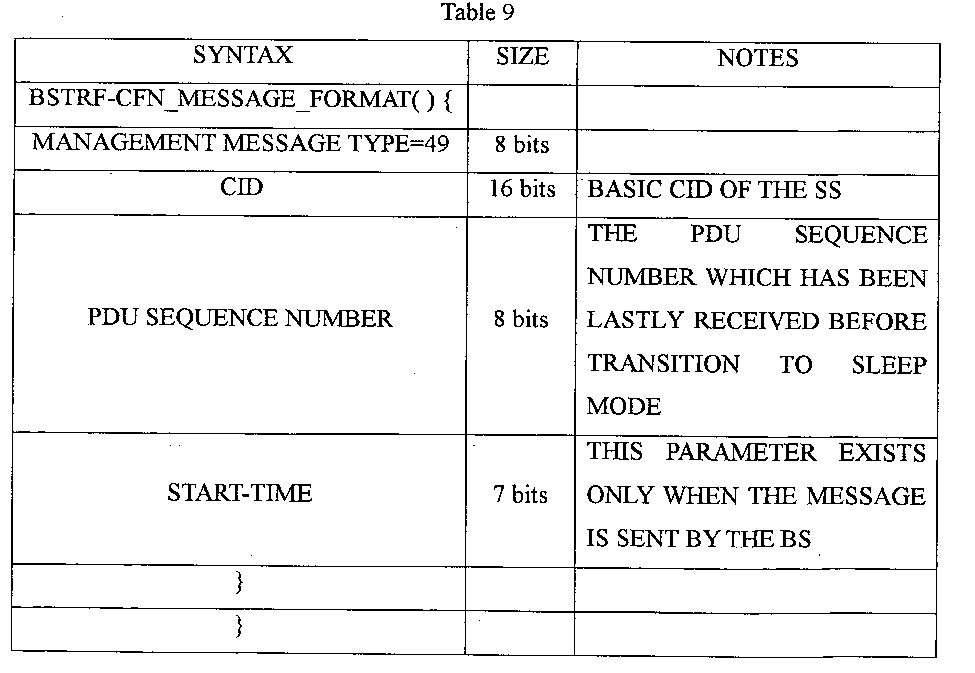

As illustrated in Table 9, the modified base station traffic confirm message has the same information elements as the base station traffic confirm message described in connection with Table 8. However, the START-TIME value, which is optional information, is included when a subject that transmits the traffic confirm message is a base station, whereas the START-TIME value is not included when the subject that transmits the traffic confirm message is a subscriber station.

The PDU SEQUENCE NUMBER will be described again herein below. The subscriber station resumes suspended transmission of packet data as it transitions from a sleep mode to an awake mode. In this case, the subscriber station re-synchronizes with a sequence number of a packet data unit that was received before transitioning to the sleep mode.

In the re-synchronization process, when a loss of a packet data unit has occurred, packet data transmission performance is deteriorated due to retransmission. This problem is resolved by transmitting a sequence number of the packet data unit. That is, when a sequence number of a packet data unit transmitted by a transmitter is different from a sequence number of a packet data unit received at a receiver, the transmitter transmits packet data on the basis of a sequence number of a previously transmitted packet data unit, and if a duplicated packet data unit is received, the receiver removes the received packet data unit from a buffer.

### II. Definition of Message for Detailed Procedure Due to Denial of Mode Transition

The sleep mode operation and the awake mode operation proposed in the current IEEE 802.16e communication system have the problems described in the related art section. That is, there is no specific definition of operations that should be performed after a state transition request is denied. Therefore, the present invention proposes a system and method for controlling a sleep mode operation to resolve the problems stated above.

With reference to Table 10 to Table 12, a description will now be made of messages related to sleep mode and awake mode operations proposed in the current IEEE 802.16e communication system and messages related to sleep mode and awake mode operations proposed in the present invention. It should be noted that the messages proposed herein are formed by modifying or adding parameters of the messages described in connection with Table 4 to Table 9.

### (1) Sleep Response (SLP_RSP) Message to Subscriber Station's Request (Transmitted from Base Station to Subscriber Station)

In the current IEEE 802.16e communication system, although the base station proposes a response message to a sleep request message requested by the subscriber station, a parameter that can be used to deny the request is reserved. Therefore, the present invention proposes a new sleep response message, which enables the reserved parameter to be used for distinguishing an operation that the subscriber station must perform, when the base station denies the sleep request by the subscriber station.

### (2) Sleep Response (SLP_RSP) Message to Base Station's Request (Transmitted from Subscriber Station to Base Station)

In the current IEEE 802.16e communication system, although the subscriber station proposes a response messages to a sleep request message from the base station, a parameter that can be used to deny the request is reserved. Therefore, the present invention proposes a sleep response message capable, which enables the reserved parameter to be used for distinguishing an operation that the base station must perform, when the subscriber station denies the sleep request by the base station.

### (3) Traffic Confirm (BSTRF_CFN) Message Requested by Subscriber Station (Transmitted from Base Station to Subscriber Station)

In the current IEEE 802.16e communication system, although a traffic confirm message corresponding to a traffic indication message, requested by the subscriber station, is proposed, an operation of denying by the base station the request of the subscriber station is not taken into consideration. Therefore, the present invention proposes a traffic confirm message having a parameter for distinguishing approval or denial of the request of the subscriber station and a parameter indicating an operation that the subscriber station should perform when the request is denied.

### (4) Traffic Confirm (SSTRF_CFN) Message Requested by Base Station (Transmitted from Subscriber Station to Base Station)

In the current IEEE 802.16e communication system, although a traffic confirm message corresponding to a base station traffic indication message, requested by the base station, is proposed, an operation of denying by the subscriber station the request of the base station is not taken into consideration. Therefore, the present invention proposes a traffic confirm message having a parameter for distinguishing approval or denial of the request of the base station.

### (5) Traffic Indication (SSTRF_IND) Message Requested by Subscriber Station (Transmitted from Subscriber Station to Base Station)

The IEEE 802.16e communication system proposes a traffic indication message transmitted to the base station by the subscriber station when there is a packet to be transmitted to the base station. However, even when the subscriber station transmits a control packet, a state transition may be denied by a traffic confirm message from the base station in response to a state transition request to an awake mode of the subscriber station. As a result, it is necessary to inform the base station of a type of the packet to be transmitted by the subscriber station. Therefore, in order to prevent a traffic confirm message requested by the subscriber station from being denied, the present invention proposes a new subscriber station traffic indication message further including a parameter for distinguishing whether a packet to be transmitted by the subscriber station is a user packet or a control packet.

### III. Preferred Embodiments

With reference to Table 10 to Table 12, a description will now be made of a format of messages newly proposed or modified for a sleep mode operation and an awake mode operation according to an embodiment of the present invention.

### (1) Sleep Response Message

The sleep response message, as stated above, is used as a response message to the sleep request message transmitted to the subscriber station by the base station or transmitted to the base station by the subscriber station. A format of the sleep response message proposed in the present invention is illustrated in Table 10 below.

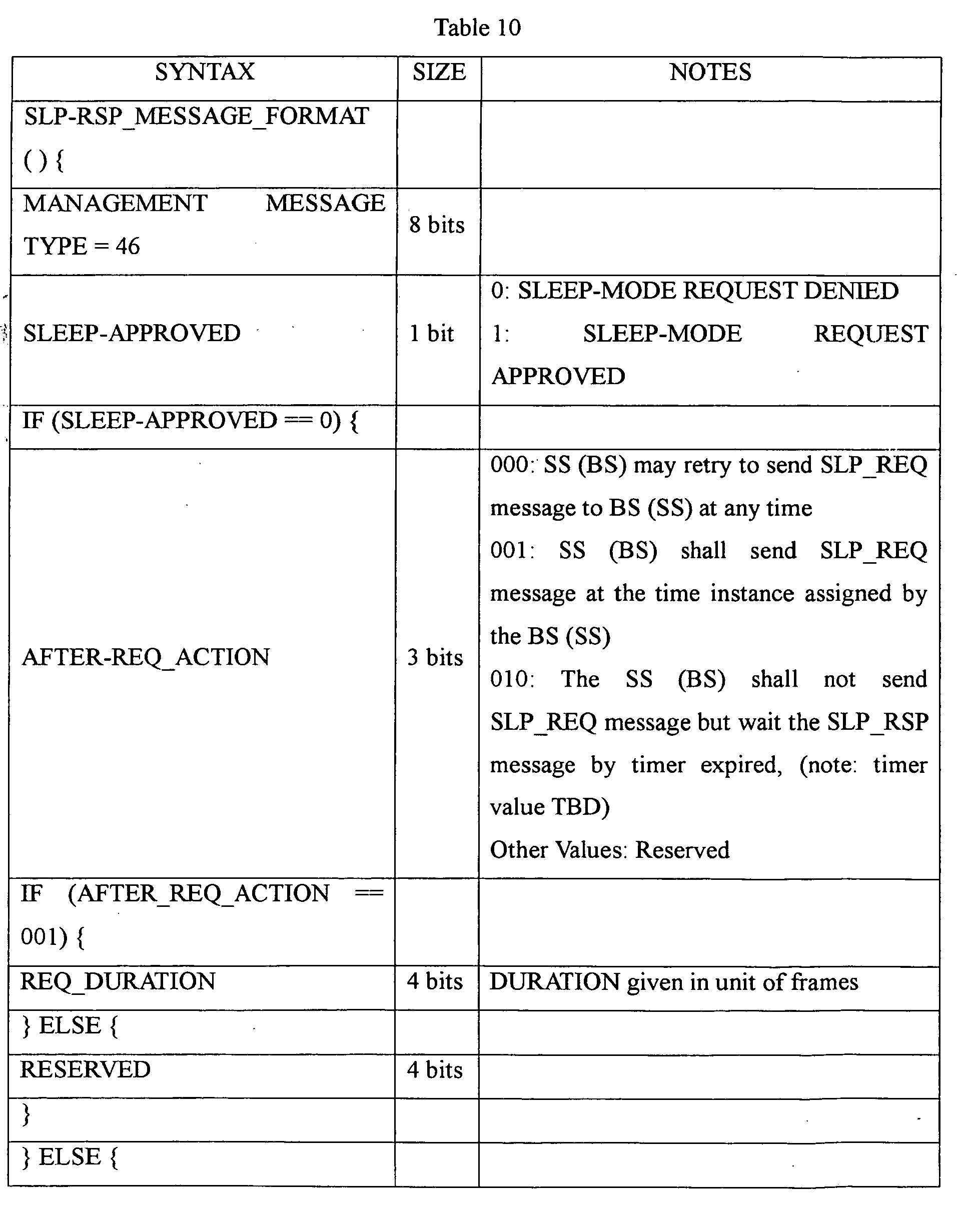

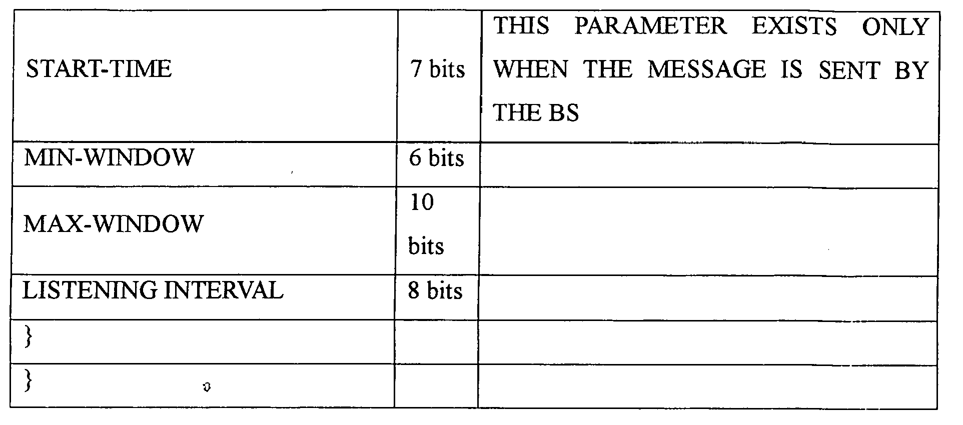

As illustrated in Table 10, the sleep response message is also a dedicated message transmitted on the basis of a connection ID of the subscriber station.

In the present invention, when a SLEEP-APPROVED value is '0', i.e., when the subscriber station cannot transition to a sleep mode (SLEEP-MODE REQUEST DENIED), the unused 7-bit RESERVED field described in connection with Table 2 is used as newly added AFTER-REQ_ACTION information element and REQ_DURATION information element. The other information elements have been described in conjunction with Table 2, and accordingly, only the newly added information elements will be described in detail herein below.

The sleep response message is a bidirectional message that is used by the subscriber station or the base station as a response to a sleep request message from its counterpart. Therefore, the newly defined information elements will be separately described according to a subject that transmits the sleep response message.

### A. Sleep Response Message Transmitted by Base Station

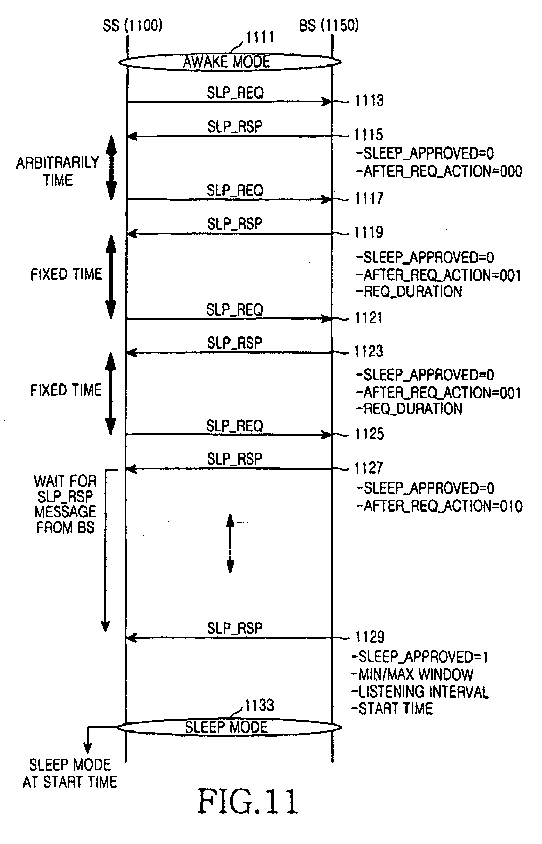

As described above, the base station can deny a transition request to a sleep mode of the subscriber station. In response to the denial by the base station, the subscriber station determines an operation that should be newly performed to make a transition to a sleep mode, based on the AFTER-REQ_ACTION value included in the sleep response message. The AFTER-REQ_ACTION procedure will be described with reference to FIG 11.

The AFTER-REQ_ACTION value can be expressed with 3 bits or 1 bit. When the AFTER-REQ_ACTION value is expressed with 1 bit, the following AFTER-REQ_ACTION value '000' is unused, the following AFTER-REQ_ACTION value '001' is replaced with '0' and the following AFTER-REQ_ACTION value '010' is replaced with '1'. Herein, an operation that the subscriber station should perform will be described on the assumption that the AFTER-REQ_ACTION value is expressed with 3 bits.
i) '000': The subscriber station retransmits the sleep request message to the base station after a lapse of an arbitrarily determined time. A value arbitrarily determined between predetermined minimum value and maximum value acquired by the subscriber station in its initialization process with the base station, or a value arbitrarily determined between a minimum value and a maximum value previously set in the subscriber station can be used as the arbitrarily determined time.
ii) '001': The subscriber station retransmits the sleep request message to the base station after a lapse of a fixed time. The fixed time can be determined based on REQ_DURATION included in the sleep response message.
iii) '010': The subscriber station waits until the base station transmits a response to the sleep request to the subscriber station, without transmitting the sleep request message to the base station any longer.

The REQ_DURATION value is expressed with 4 bits and is given in a unit of frames. The subscriber station must retransmit the sleep request message after a lapse of as many frames as the REQ_DURATION from a frame of a sleep response message received from the base station.

### B. Sleep Response Message Transmitted by Subscriber Station

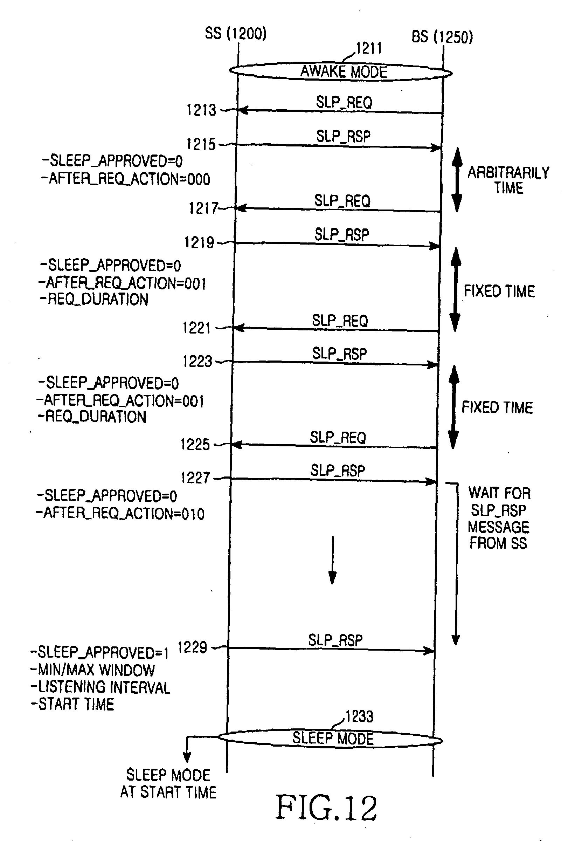

As described above, the subscriber station can deny a transition request to a sleep mode of the base station. In response to the denial by the subscriber station, the base station determines an operation that should be newly performed to allow the subscriber station to make a transition to a sleep mode, based on an AFTER-REQ_ACTION value included in the sleep response message. The AFTER-REQ_ACTION procedure will be described in more detail herein below with reference to FIG 12.

The AFTER-REQ_ACTION value can be expressed with 3 bits or 1 bit. When the AFTER-REQ_ACTION value is expressed with 1 bit, the following AFTER-REQ_ACTION value '000' is unused, the following AFTER-REQ_ACTION value '001' is replaced with '0' and the following AFTER-REQ_ACTION value '010' is replaced with '1'. Herein, an operation that the base station should perform will be described on the assumption that the AFTER-REQ_ACTION value is expressed with 3 bits.
i) '000': The base station retransmits the sleep request message to the subscriber station after a lapse of a arbitrarily determined time. The arbitrarily determined time is a time previously set by the base station, and a value arbitrarily selected between predetermined minimum value and maximum value is used as the arbitrarily determined time.
ii) '001': The base station retransmits the sleep request message to the subscriber station after a lapse of a fixed time. The fixed time can be determined based on REQ_DURATION included in the sleep response message transmitted by the subscriber station.
iii) '010': The base station waits until the subscriber station transmits a response to the sleep request by the base station, without transmitting the sleep request message to the subscriber station any longer.

The REQ_DURATION value is expressed with 4 bits and is given in a unit of frames. The base station retransmits the sleep request message after a lapse of as many frames as the REQ_DURATION value from a frame of a sleep response message currently received from the subscriber station.

### (2) Traffic Confirm (TRF_CFN) Message

As described above, in the current IEEE 802.16e communication system, the traffic confirm message is defined as a message corresponding to the traffic indication message transmitted to the subscriber station by the base station or transmitted to the base station by the subscriber station. However, an operation of denying the traffic indication is not taken into consideration. That is, there is no specific definition of a specification and a corresponding message for an operation that the base station or the subscriber station, which is a subject of the indication, should perform when denying the traffic indication.

Therefore, the present invention proposes a new traffic confirm message formed by adding a parameter indicating an approval or denial of the received traffic indication message and a parameter indicting an operation that the subscriber station or the base station should perform in case of a denial, to the existing traffic confirm message.

The traffic confirm message proposed in the present invention has a format as shown in Table 11 below.

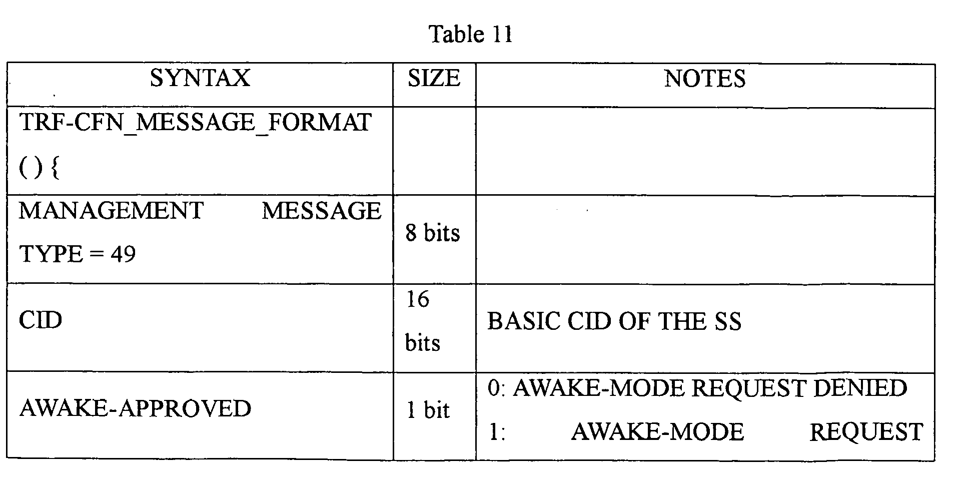

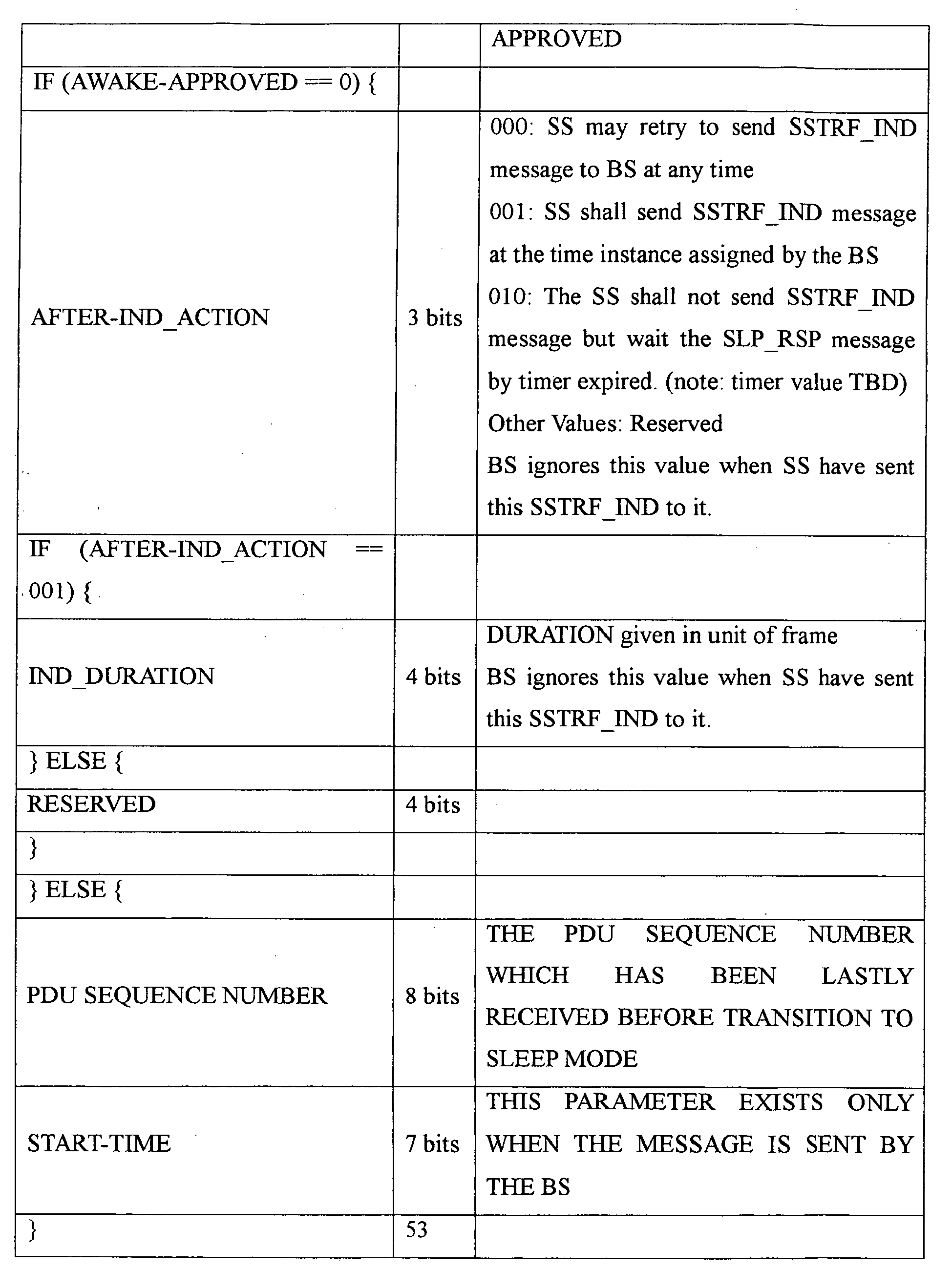

The traffic confirm message is also a dedicated message transmitted on the basis of a connection ID of the subscriber station.

In the present invention, as illustrated in Table 11, the traffic confirm message includes an AWAKE-APPROVED information element indicating an approval/denial of the traffic indication message, an AFTER-IND_ACTION information element indicating an operation that the subscriber station should perform in case of denial, and an IND_DURATION information element, in addition to the information elements of the traffic confirm message described in connection with Table 9. The existing information elements included in Table 11 have been described in conjunction with Table 9, and therefore, only the newly added information elements will be described in detail herein below.

The AWAKE-APPROVED value is expressed with 1 bit. AWAKE--APPROVED = 0 indicates that transitioning to an awake mode is impossible (AWAKE-MODE REQUEST DENIED), while AWAKE-APPROVED = 1 indicates that transitioning to an awake mode is possible (AWAKE-MODE REQUEST APPROVED). For AWAKE-APPROVED = 0, there exist the AFTER-IND_ACTION information element and the IND_DURATION information element, and for AWAKE-APPROVED = 1, the traffic confirm message described in connection with Table 9 is used.

The traffic confirm message is a bidirectional message that is used by the subscriber station or the base station as a response to a traffic indication message from its counterpart. Therefore, the newly defined information elements will be separately described according to a subject that transmits the traffic confirm message.

### A. Traffic Confirm (BSTRF_IND) Message Transmitted by Base Station

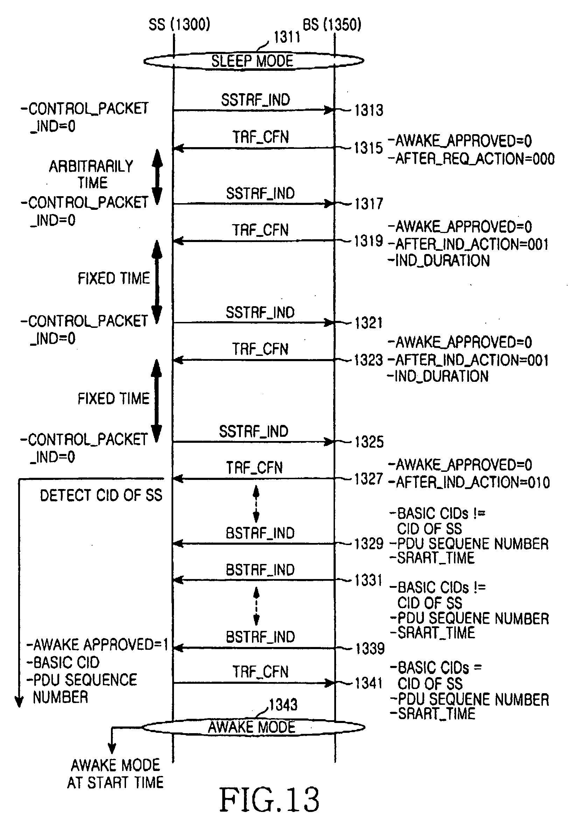

AS described above, the base station can deny a transition to an awake mode, requested by the subscriber station. In response to the denial by the base station, the subscriber station determines an operation that should be newly performed to make a transition to an awake mode, based on the AFTER-IND_ACTION value included in the traffic confirm message. The AFTER-IND_ACTION procedure will be described with reference to FIG 13.

The AFTER-IND_ACTION value can be expressed with 3 bits or 1 bit. When the AFTER-IND_ACTION value is expressed with 1 bit, the following AFTER-IND_ACTION value '000' is unused, the following AFTER-IND_ACTION value '001' is replaced with '0' and the following AFTER-INO_ACTION value '010' is replaced with '1'. Herein, an operation that the subscriber station should perform will be described on the assumption that the AFTER-IND_ACTION value is expressed with 3 bits.
i) '000': The subscriber station retransmits the traffic indication message to the base station after a lapse of a arbitrarily determined time. A value arbitrarily determined between predetermined minimum value and maximum value acquired by the subscriber station in its initialization process with the base station, or a value arbitrarily determined between a minimum value and a maximum value previously set in the subscriber station can be used as the arbitrarily determined time.
ii) `001': The subscriber station retransmits the traffic indication message to the base station after a lapse of a fixed time. The fixed time can be determined based on IND_DURATION included in the traffic confirm message.
iii) '010': The subscriber station decodes the traffic indication message transmitted by the base station for a listening interval of the subscriber station itself, without transmitting the sleep request message to the base station any longer, to thereby determine whether it will stay in the awake mode or make a state transition back to the sleep mode according to presence/absence of a connection ID of the subscriber station.

The IND_DURATION value is expressed with 4 bits and is given in a unit of frames. The subscriber station retransmits the traffic indication message after a lapse of as many frames as the IND_DURATION from a frame of a traffic confirm message received from the base station.

### B. Traffic Confirm (SSTRF_CFN) Message Transmitted by Subscriber Station

As described above, the subscriber station can deny a transition to an awake mode, requested by the base station. In response to the denial by the subscriber station, the base station should perform an operation of including a connection ID of the subscriber station in the traffic indication message to be transmitted next time. Therefore, the AFTER-IND_ACTION information element and the IND_DURATION information element are not taken into consideration.

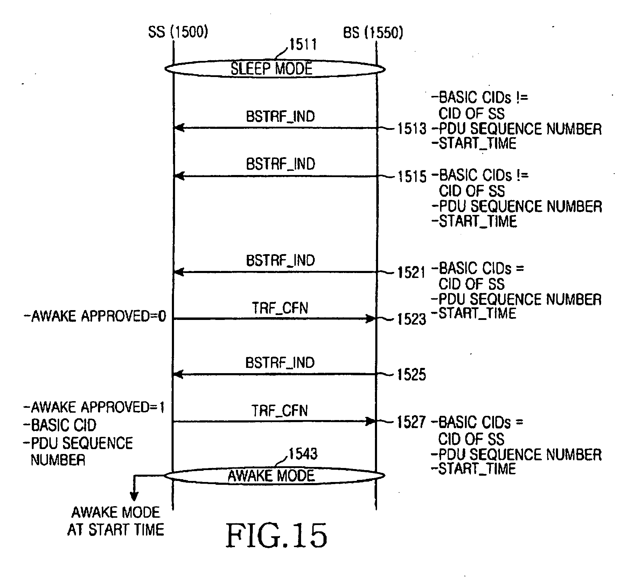

The subscriber station is also not required to set the AFTER-IND_ACTION information element and the IND_DURATION information element to specific values. In other words, when the subscriber station denies a transition to an awake mode, only the MANAGEMENT MESSAGE TYPE information field being set to '49' and the AWAKE-APPROVED information field being set to '0' are meaningful. Operations related to this message will be described in more detail herein below with reference to FIG 15.

### (3) Subscriber Station Traffic Indication (SSTRF_IND) Message

When a packet to be transmitted to the base station is generated, the subscriber station in a sleep mode transmits the subscriber station traffic indication message in order to transition to an awake mode before transmission of the packet. Upon receiving the subscriber station traffic indication message, the base station can deny the transition to the awake mode of the subscriber station.

However, if the packet to be transmitted by the subscriber station is a control packet, the base station should unconditionally approve the transition to the awake mode of the subscriber station. Accordingly, the subscriber station traffic indication message proposed in the present invention has a format as shown in Table 12 below.

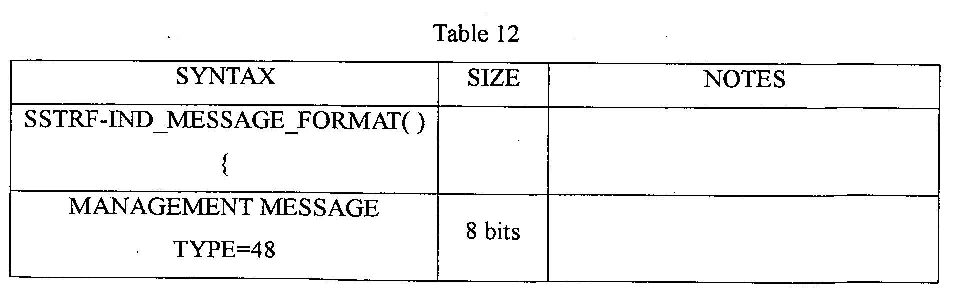

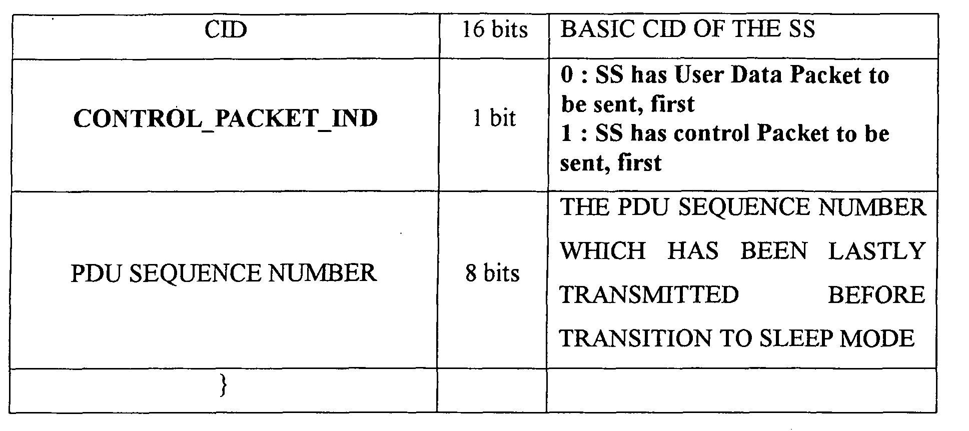

The subscriber station traffic indication message is also a dedicated message transmitted on the basis of a connection ID of the subscriber station. In the present invention, as illustrated in Table 12, the subscriber station traffic indication message has the information elements described in conjunction with Table 6, and further includes a CONTROL_PACKET_IND information element.

When the CONTROL_PACKET_IND value is '0', it means that a packet to be transmitted by the subscriber station is a user data packet. Therefore, the base station receiving the subscriber station traffic indication message can approve or deny the transition request to the awake mode of the subscriber station according to its condition.

When the CONTROL_PACKET_IND value is '1', it means that a packet to be transmitted by the subscriber station is a control packet. Therefore, the base station receiving the subscriber station traffic indication message must unconditionally approve the transition request to the awake mode of the subscriber station.

### IV. Description of Procedures Based on Defined Messages

With reference to the accompanying drawings, a detailed description will now be made of procedures performed by a base station or a subscriber station according to an embodiment of the present invention. In the following description, the newly added or modified messages according to an embodiment of the present invention will be described with reference to the tables presented in the specification.

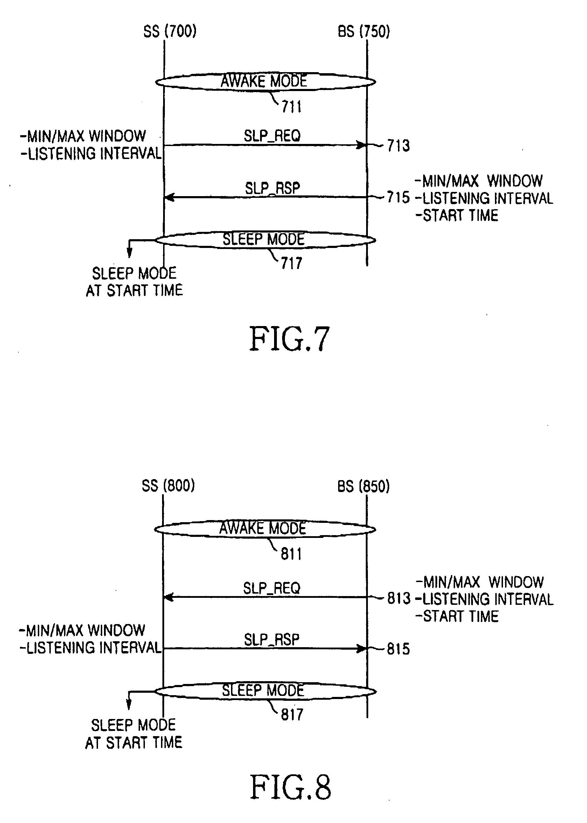

First, with reference to FIGs. 7 to 10, a description will be made of a basic mode transition procedure through a message exchange between a subscriber station and a base station. Next, with reference to FIGs. 11 to 19, a detailed description will be made of an operating procedure that should be performed by the base station or the subscriber station when a mode transition request by the subscriber station or the base station is defined.

A description of each procedure given herein will be separated into a mode transition procedure from a sleep mode to an awake mode and a mode transition procedure from an awake mode to a sleep mode. In addition, the description will be separately made according to whether a mode transition request is made by the subscriber station or the base station, and whether a denial of the mode transition request is made by the subscriber station or the base station.

FIG 7 is a signal flow diagram schematically illustrating transitioning to a sleep mode at the request of a subscriber station in an IEEE 802.16e communication system according to an embodiment of the present invention. Referring to FIG 7, if a subscriber station 700 desires to transition to a sleep mode from an awake mode in step 711, the subscriber station 700 transmits a sleep request message to a base station 750 in step 713. The sleep request message includes the information elements described in connection with Table 1. Upon receiving the sleep request message from the subscriber station 700, the base station 750 determines whether to approve the state transition to the sleep mode of the subscriber station 700 considering conditions of the subscriber station 700 and the base station 750, and transmits a sleep response message to the subscriber station 700 according to the determination result in step 715.

Here, the base station 750 determines whether to approve the state transition to the sleep mode of the subscriber station 700 considering whether there is packet data to be transmitted to the subscriber station 700. As described with reference to Table 10, when the base station 750 approves the state transition to the sleep mode, it sets the SLEEP-APPROVED value to '1'. However, when the base station 750 denies the state transition to the sleep mode, it sets the SLEEP-APPROVED value to '0' The information elements included in the sleep response message have been described with reference to Table 10.

In particular, the base station 750 includes a START-TIME value in the sleep response message before transmission so that the subscriber station 700 transitions to a sleep mode according to the START-TIME value. In this manner, in response to a state transition request to a sleep mode of the subscriber station 700, the base station 750 transmits a sleep response message containing a START-TIIME value to the subscriber station 700 so that the subscriber station 700 transitions from the awake mode to the sleep mode according to the START-TIME value in step 717.

FIG 8 is a signal flow diagram schematically illustrating a procedure for transitioning to a sleep mode at the request of a base station in an IEEE 802.16e communication system according to an embodiment of the present invention. Referring to FIG 8, if a base station 850 desires a subscriber station 800 to transition to a sleep mode while the subscriber station 800 is in an awake mode in step 811, the base station 850 transmits a sleep request message to the subscriber station 800 in step 813.

The sleep request message includes the information elements described in connection with Table 4 in that a START-TIME value is included, and is different from the sleep request message described in connection with Fig 7.

Upon receiving the sleep request message from the base station 850, the subscriber station 800 determines whether to approve the state transition to the sleep mode considering its own condition, and transmits a sleep response message to the base station 850 according to the determination result in step 815.

Here, the subscriber station 800 determines whether to allow the subscriber station 800 itself to transition to the sleep mode considering whether there is packet data to be transmitted to the base station 850. As described with reference to Table 10, when the subscriber station 800 approves the transition to the sleep mode, it sets the SLEEP-APPROVED value to '1'. However, when the subscriber station 800 denies the transition to the sleep mode, it sets the SLEEP-APPROVED value to '0'. The information elements included in the sleep response message have been described with reference to Table 10.

In particular, the subscriber station 800 includes in the sleep response message the parameters, i.e., MIN-WINDOW, MAX-WINDOW and LISTENING INTERVAL, included in the sleep request message transmitted from the base station 850 before transmission of the sleep response message. In this manner, the subscriber station 800 transitions from the awake mode to the sleep mode according to the START-TIME value in step 817.

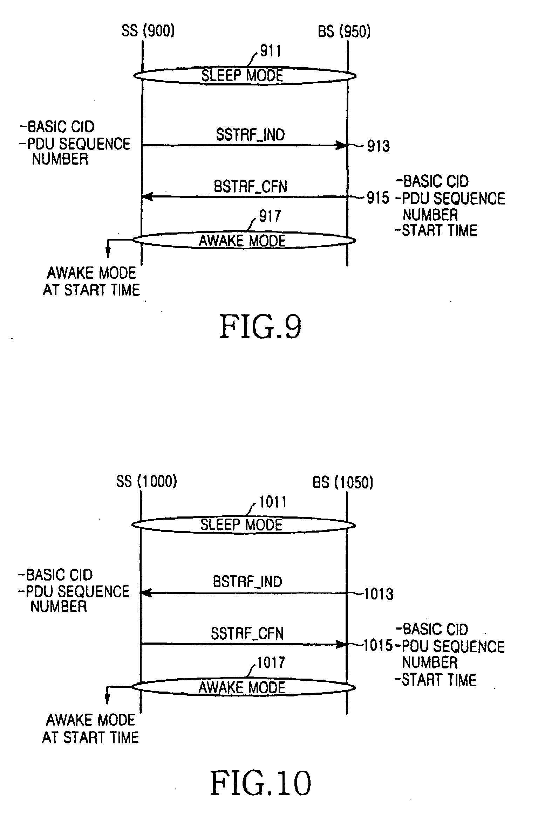

FIG 9 is a signal flow diagram schematically illustrating a procedure for transitioning to an awake mode at the request of a subscriber station in an IEEE 802.16e communication system according to an embodiment of the present invention. Referring to FIG 9, if a subscriber station 900 desires to transition to an awake mode from a sleep mode in step 911, the subscriber station 900 transmits a subscriber station traffic indication message to a base station 950 in step 913.

The subscriber station traffic indication message includes the information elements described in connection with Table 12. In particular, the subscriber station traffic indication message includes a PDU sequence number that the subscriber station 900 has lastly transmitted before a transition to the sleep mode. Upon receiving the subscriber station traffic indication message from the subscriber station 900, the base station 950 distinguishes the subscriber station 900 using a connection ID included in the subscriber station traffic indication message, and then transmits a traffic confirm message to the subscriber station 900 in step 915.

Here, the information elements included in the traffic confirm message have been described with reference to Table 11, and particularly, the traffic confirm message includes a START-TIME value. Of course, the base station 950 can transmit a base station traffic confirm message instead of the traffic confirm message. In this case, the information elements included in the base station traffic confirm message have been described with reference to Table 8 or Table 9. In this manner, the subscriber station 900 transitions from the sleep mode to the awake mode according to the START-TIME value in step 917.

FIG 10 is a signal flow diagram schematically illustrating a transition procedure to an awake mode at the request of a base station in an IEEE 802.16e communication system according to an embodiment of the present invention. Referring to FIG 10, if a base station 1050 desires a subscriber station 1000 to make a state transition to an awake mode while the subscriber station 1000 is in a sleep mode in step 1011, the base station 1050 broadcasts a base station traffic indication message including a connection ID of the subscriber station 1000 in step 1013.

The base station traffic indication message includes the information elements described in connection with Table 5, and particularly, the base station traffic indication message includes a PDU sequence number that the base station 1050 has lastly transmitted before transitioning to the sleep mode. Upon receiving the base station traffic indication message broadcasted from the base station 1050, the subscriber station 1000 reads a connection ID included in the received base station traffic indication message, determines whether the read connection ID is identical to its own connection ID, i.e., whether the received base station traffic indication message is a base station traffic indication message for the subscriber station 1000 itself, and then transmits a traffic confirm message to the base station 1050, if the read connection ID is identical to its own connection ID in step 1015.

The information elements included in the traffic confirm message have been described with reference to Table 11, and in particular, the traffic confirm message includes a START-TIME value. The subscriber station 1000 can transmit a subscriber station traffic confirm message instead of the traffic confirm message. In this case, the information elements included in the subscriber station traffic confirm message have been described with reference to Table 7. In this manner, the subscriber station 1000 transitions from the sleep mode to the awake mode according to the START-TIME value in step 1017.

FIG 11 is a signal flow diagram illustrating a state transition procedure to a sleep mode at the request of a subscriber station in an IEEE 802.16e communication system according to an embodiment of the present invention. Referring to FIG 11, if a subscriber station 1100 desires to transition to a sleep mode from an awake mode in step 1111, the subscriber station 1100 transmits a sleep request message to a base station 1150 in step 1113.

The sleep request message includes the information elements described in connection with Table 1. Upon receiving the sleep request message from the subscriber station 1100, the base station 1150 determines whether to approve the state transition to the sleep mode of the subscriber station 1100, considering conditions of the subscriber station 1100 and the base station 1150, and transmits a sleep response message to the subscriber station 1100 according to the determination result in step 1115. Here, the base station 1150 determines whether to approve the transition to the sleep mode of the subscriber station 1100 by considering whether there is packet data to be transmitted to the subscriber station 1100.

If there is packet data to be transmitted to the subscriber station 1100, the base station 1150 denies the transition request to the sleep mode of the subscriber station 1100. However, if there is no packet data to be transmitted to the subscriber station 1100, the base station 1150 approves the state transition request to the sleep mode of the subscriber station 1100.

As described with reference to Table 10, when the base station 1150 denies the state transition to the sleep mode of the subscriber station 1100, it sets the SLEEP-APPROVED value to '0', sets an AFTER-REQ ACTION value for an operation that the subscriber station 1100 should perform later on, to '000', so that the subscriber station 1100 retransmits a sleep request message after a lapse of a arbitrarily determined time.

Upon receiving the sleep response message from the base station 1150, the subscriber station 1100 determines from the sleep response message that the state transition request to the sleep mode was denied, extracts an AFTER-REQ_ACTION value from the received sleep response message, and retransmits a sleep request message according to the AFTER-REQ_ACTION value of '000' after a lapse of a arbitrarily determined time in step 1117.

Upon receiving the sleep request message retransmitted from the subscriber station 1100, when there is data to be transmitted to the subscriber station 1100, the base station 1150 determines to deny the state transition to the sleep mode of the subscriber station 1100, considering conditions of the subscriber station 1100 and the base station 1150, and then sets a SLEEP-APPROVED value to '0'.

In an embodiment of the present invention, the base station 1150 sets the AFTER-REQ_ACTION value to '001', sets REQ_DURATION to a particular value so that the subscriber station 1100 retransmits a sleep request message after a lapse of a waiting duration, and transmits to the subscriber station 1100 a sleep response message indicating that the subscriber station 1100 should transmit the sleep response message after a lapse of a fixed time in step 1119.

Upon receiving the sleep response message from the base station 1150, the subscriber station 1100 analyzes the received sleep response message and then, retransmits the sleep request message to the base station 1150 after a lapse of a fixed REQ_DURATION value in step 1121.

Upon receiving the sleep request message retransmitted from the subscriber station 1100, when there is data to be transmitted to the subscriber station 1100, the base station 1150 re-transmits a sleep response message having the same meaning as that transmitted in step 1119 to the subscriber station 1100, considering conditions of the subscriber station 1100 and the base station 1150 in step 1123.

Upon receiving the sleep response message from the base station 1150, the subscriber station 1100 retransmits the sleep request message to the base station 1150 in the same way as described in step 1121 in step 1125.

In an alternative embodiment of the present invention, upon receiving the sleep request message retransmitted from the subscriber station 1100, when there is data to be transmitted to the subscriber station 1100, the base station 1150 determines again to deny the state transition to the sleep mode of the subscriber station 1100, considering conditions of the subscriber station 1100 and the base station 1150, and sets the SLEEP-APPROVED value to '0'.

At this point, the base station 1150 sets the AFTER-REQ_ACTION value to '010' and transmits to the subscriber station 1100 a sleep response message indicating that the subscriber station 1100 should wait for a sleep response message to be transmitted later by the base station 1150, without retransmitting the sleep request message in step 1127.

Upon receiving the sleep response message from the base station 1150, the subscriber station 1100 analyzes the sleep response message, and then waits for a sleep response message to be received from the base station 1150, without transmitting the sleep request message any longer in step 1129.

At this time, the base station 1150 sets a SLEEP-APPROVED value in the sleep response message to '1' before transmission, and accordingly, the subscriber station 1100 transitions to the sleep mode after a lapse of a time indicated by the START-TIME value included in the sleep response message in step 1133.

FIG 12 is a signal flow diagram illustrating a state transition procedure to a sleep mode at the request of a base station in an IEEE 802.16e communication system according to an embodiment of the present invention. Referring to FIG 12, if a base station 1250 has no data to transmit to a subscriber station 1200 while the subscriber station 1200 is in an awake mode in step 1211, the base station 1250 desires the subscriber station 1200 to make a state transition to a sleep mode, and accordingly, the base station 1250 transmits a sleep request message to the subscriber station 1200 in step 1213.

The sleep request message includes the information elements described in connection with Table 4. Upon receiving the sleep request message from the base station 1250, the subscriber station 1200 determines to deny the state transition to the sleep mode of the base station 1250, considering conditions of the subscriber station 1200 and the base station 1250, and transmits a sleep response message to the base station 1250 according to the determination result in step 1215.

Here, the subscriber station 1200 determines whether to approve the state transition to the sleep mode of the subscriber station 1200, requested by the base station 1250, considering whether there is packet data to be transmitted to the base station 1250. When there is data to be transmitted to the base station 1250, the subscriber station 1200 can deny the request of the base station 1250, if the data to be transmitted is a control packet or an urgent user data packet.

In the embodiment of the present invention, as described in connection with Table 10, when the subscriber station 1200 denies the state transition request to the sleep mode of the base station 1250, it sets the SLEEP-APPROVED value to '0', sets an AFTER-REQ_ACTION value for an operation that the base station 1250 will perform later on, to '000', so that the base station 1250 retransmits a sleep request message after a lapse of a arbitrarily determined time.

Upon receiving the sleep response message from the subscriber station 1200, the base station 1250 determines from the sleep response message that the state transition request to the sleep mode was denied, extracts an AFTER-REQ_ACTION value from the received sleep response message, and retransmits a sleep request message according to the AFTER-REQ_ACTION value of '000', after a lapse of a arbitrarily determined time in step 1217.

Upon receiving the sleep request message retransmitted from the base station 1250, when there is data to be transmitted to the base station 1250, the subscriber station 1200 determines to deny the state transition to the sleep mode of the subscriber station 1200, considering conditions of the subscriber station 1200 and the base station 1250.

In an alternative embodiment of the present invention, the subscriber station 1200 sets a SLEEP-APPROVED value to '0' according to the determination result, sets the AFTER-REQ_ACTION value to '001', and sets a REQ_DURATION value to a particular value. Thereafter, the subscriber station 1200 transmits to the base station 1250 a sleep response message indicating that the base station 1250 should retransmit the sleep request message after a lapse of a fixed time in step 1219.

Upon receiving the sleep response message from the subscriber station 1200, the base station 1250 analyzes the received sleep response message and thereafter, retransmits the sleep request message to the subscriber station 1200 after a lapse of a fixed REQ_DURATION value in step 1221,

Upon receiving the sleep request message retransmitted from the base station 1250, the subscriber station 1200 transmits again a sleep response message having the same meaning as that transmitted in step 1219 to the base station 1250, considering conditions of the subscriber station 1200 and the base station 1250, in step 1223.

Upon receiving the sleep response message from the subscriber station 1200, the base station 1250 retransmits the sleep request message to the subscriber station 1200 in the same way as described in step 1221, in step 1225.

Upon receiving the sleep request message retransmitted from the base station 1250, when there is data to be transmitted to the base station 1250, the subscriber station 1200 determines to deny the state transition to the sleep mode of the subscriber station 1200 considering conditions of the subscriber station 1200 and the base station 1250.

In another embodiment of the present invention, the subscriber station 1200 sets the SLEEP-APPROVED value to '0', sets the AFTER-REQ_ACTION value to '010', and transmits to the base station 1250 a sleep response message indicating that the base station 1250 should wait for a sleep request message to be transmitted later by the subscriber station 1200, without retransmitting the sleep request message in step 1227.

Upon receiving the sleep response message from the subscriber station 1200, the base station 1250 analyzes the sleep response message, and then waits for a sleep response message to be received from the subscriber station 1200, without transmitting the sleep request message any longer in step 1229.

At this time, the subscriber station 1200 sets a SLEEP-APPROVED value in the sleep response message to '1' before transmission, and accordingly, the base station 1250 determines that the subscriber station 1200 transitions to the sleep mode, after a lapse of a time indicated by the START-TIME value included in the sleep response message in step 1233.

FIG 13 is a signal flow diagram illustrating a state transition procedure to an awake mode at the request of a subscriber station to transmit a data packet in an IEEE 802.16e communication system according to an embodiment of the present invention. Referring to FIG 13, if a subscriber station 1300 detects generation of a user data packet to be transmitted to a base station 1350 and desires to make a state transition to an awake mode from a sleep mode in step 1311, the subscriber station 1300 transmits a subscriber station traffic indication message to the base station 1350 in step 1313.

The subscriber station traffic indication message includes the information elements described in connection with Table 12, and a CONTROL_PACKET_IND value included therein is set to '0' because the subscriber station 1300 attempts a transition to the awake mode.

Upon receiving the subscriber station traffic indication message from the subscriber station 1300, the base station 1350 can determine whether to approve the state transition request to the awake mode of the subscriber station 1300 because the CONTROL_PACKET_IND value in the subscriber station traffic indication message is set to '0'.

As stated above, the base station 1350 can deny a transition to the awake mode, requested by the subscriber station 1300, for the following reasons.
1) Efficient Utilization of Base Station's Capacity: When the number of subscriber stations located in the current cell reaches a capacity limit or a critical capacity level of the base station 1350 due to movement of the subscriber station 1300, the base station 1350 can previously prevent its capacity excess by denying the transition to the awake mode of the subscriber station 1300.
2) Load Balancing on Subscriber Station's Traffic: The base station 1350 can increase packet transmission opportunities of other subscriber stations by suppressing a state transition to the awake mode of the subscriber station 1300 having a high packet transmission rate to the base station 1350. Alternatively, the base station 1350 can increase efficiency of the entire packet transmission rate by preferentially considering a state transition to an awake mode of the subscriber station 1300 having a high packet transmission rate.
3) Reliable Traffic Transmission by Subscriber Station in Awake Mode (QoS Guaranteed): The base station 1350 can give more packet transmission opportunities to a subscriber station having higher priority by suppressing a transition to an awake mode of the subscriber station 1300 having relatively lower priority.

Therefore, the base station 1350 determines to deny the state transition to the awake mode of the subscriber station 1300, considering conditions of the subscriber station 1300 and the base station 1350, based on the above criteria, and transmits a traffic confirm message described in connection with Table 11 to the subscriber station 1300 according to the determination result in step 1315.

Here, as described with reference to Table 11, the base station 1350 sets an AWAKE-APPROVED value to '0' to deny the state transition to the awake mode of the subscriber station 130.

In the embodiment of the present invention, the base station 1350 can set an AFTER-REQ_ACTION value for an operation to be performed later by the subscriber station 1300 to '000', so that the subscriber station 1300 retransmits a subscriber station traffic indication message after a lapse of a arbitrarily determined time.

Upon receiving the traffic confirm message from the base station 1350, the subscriber station 1300 determines from the received traffic confirm message that the state transition request to the awake mode was denied, extracts an AFTER-REQ_ACTION value from the received traffic confirm message, and retransmits the subscriber station traffic indication message according to the AFTER-REQ_ACTION value of '000' after a lapse of a arbitrarily determined time in step 1317.

Upon receiving the subscriber station traffic indication message retransmitted from the subscriber station 1300, the base station 1350 determines to deny the state transition to the awake mode of the subscriber station 1300, considering conditions of the subscriber station 1300 and the base station 1350.

In an alternative embodiment of the present invention, the base station 1350 sets the AWAKE-APPROVED value to '0' and sets the AFTER-IND_ACTION value to '001'. In addition, the base station 1350 sets the IND_DURATION to a particular value, and transmits to the subscriber station 1300 a traffic confirm message indicating that the subscriber station 1300 should retransmit the subscriber station traffic indication message after a lapse of a fixed time in step 1319.

Upon receiving the traffic confirm message from the base station 1350, the subscriber station 1300 analyzes the traffic confirm message and thereafter, retransmits the subscriber station traffic indication message to the base station 1350 after a lapse of a fixed IND_DURATION value in step 1321.

Upon receiving the subscriber station traffic indication message retransmitted from the subscriber station 1300, the base station 1350 transmits to the subscriber station 1300 a traffic confirm message having the same meaning as that transmitted in step 1319, considering conditions of the subscriber station 1300 and the base station 1350, in step 1323.

Upon receiving the traffic confirm message from the base station 1350, the subscriber station 1300 retransmits the subscriber station traffic indication message to the base station 1350 in the same way as described in step 1321, in step 1325

Upon receiving the subscriber station traffic indication message retransmitted from the subscriber station 1300, the base station 1350 determines to deny the state transition to the awake mode of the subscriber station 1300, considering conditions of the subscriber station 1200 and the base station 1250.

In another embodiment of the present invention, the base station 1350 sets the AWAKE-APPROVED value to '0' and sets the AFTER-IND_ACTION value to '010'. The base station 1350 transmits to the subscriber station 1300 a traffic confirm message indicating that the subscriber station 1300 should wait for a subscriber station traffic indication message to be transmitted later by the base station 1350, without retransmitting the subscriber station traffic indication message in step 1327.

Upon receiving the traffic confirm message from the base station 1350, the subscriber station 1300 analyzes the traffic confirm message, thereafter, receives the base station traffic indication message from the base station 1350 for each LISTENING INTERVAL while performing the sleep interval update algorithm without transmitting the subscriber station traffic indication message any longer, and determines whether a connection ID for the subscriber station 1300 is included in the received base station traffic indication message in steps 1329, 1331, and 1339.

If a connection ID for the subscriber station 1300 is included in the received base station traffic indication message (i.e., if the base station 1350 has data to be transmitted to the subscriber station 1300), the subscriber station 1300 determines to transition to the awake mode and transmits a traffic confirm message corresponding to the base station traffic indication message to the base station 1350 in step 1341. The subscriber station 1300 transitions to the awake mode after a lapse of a time indicated by a START-TIME value included in the received base station traffic indication message in step 1343. In this case, an AWAKE-APPROVED value in the traffic confirm message is set to '1'.

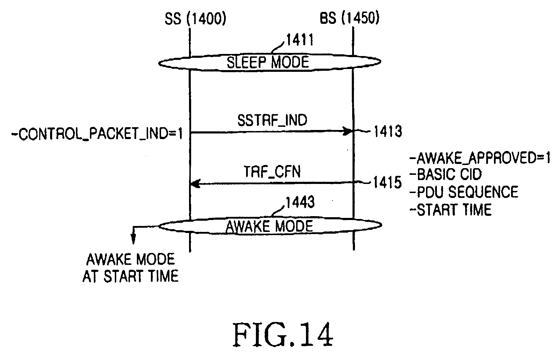

FIG 14 is a signal flow diagram illustrating a state transition procedure to an awake mode at the request of a subscriber station to transmit a control packet in an IEEE 802.16e communication system according to an embodiment of the present invention. Referring to FIG 14, if a subscriber station 1400 detects generation of a control packet to be transmitted to a base station 1450 while it is in a sleep mode in step 1411, the subscriber station 1400 transmits a subscriber station traffic indication. message to the base station 1450 to make a state transition to an awake mode in step 1413.

The subscriber station traffic indication message includes the information elements described in connection with Table 12, and a CONTROL_PACKET_IND value included therein is set to '1' because the subscriber station 1400 attempts a transition to the awake mode to transmit a control packet.

Upon receiving the subscriber station traffic indication message from the subscriber station 1400, the base station 1450 must approve the transition request to the awake mode of the subscriber station 1400 regardless of conditions of the subscriber station 1400 and the base station 1450 because the CONTROL_PACKET_IND value in the subscriber station traffic indication message is set to '1'.

Therefore, the base station 1450 transmits to the subscriber station 1400 a traffic confirm message with an AWAKE-APPROVED value being set to `1' indicating an approval of the state transition to the awake mode of the subscriber station 1400 in step 1415.

Upon receiving the traffic confirm message, the subscriber station 1400 determines from the received traffic confirm message that the AWAKE-APPROVED value was set to '1', analyzes a START-TIME value, and then transitions to the awake mode after a lapse of as munch time as the START-TIME value in step 1443.

FIG 15 is a signal flow diagram illustrating a state transition procedure to an awake mode at the request of a base station in an IEEE 802.16e communication system according to an embodiment of the present invention. Referring to FIG 15, a subscriber station 1500 currently stays in a sleep mode in step 1511. If there is a packet to be transmitted to particular subscriber stations, a base station 1550 repeatedly broadcasts a base station traffic indication message including connection IDs of the subscriber stations in steps 1513, 1515, and 1521. The base station traffic indication message includes the information elements described in conjunction with Table 5.

Upon receiving the base station traffic indication message broadcasted from the base station 1550, the subscriber station 1500 reads a connection ID included in the base station traffic indication message and determines whether the read connection ID is identical to its own connection ID, i.e., whether the received base station traffic indication message is a base station traffic indication message for the subscriber station 1500 itself. If it is determined that the received base station traffic indication message is a base station traffic indication message for the subscriber station 1500 itself, the subscriber station 1500 determines whether to approve the transition request to the awake mode of the base station 1550 considering its condition, for example, its remaining battery power.

If current battery power of the subscriber station 1500 is almost exhausted, such that no more packet transmission/reception is available, the subscriber station 1550 should be able to deny the transition request to the awake mode of the base station 1550. For example, the subscriber station 1500 transmits to the base station 1550 a traffic confirm message indicating that the subscriber station 1500 denies the transition to the awake mode in step 1523.

Upon receiving the traffic confirm message, the base station 1550 determines from the traffic confirm message that the subscriber station 1500 has denied the transition to the awake mode, includes again a connection ID of the subscriber station 1500 in the base station traffic indication message, and broadcasts the base station traffic indication message in step 1525.

Upon receiving the base station traffic indication message, the subscriber station 1500 determines again whether its own connection ID is included in the received base station traffic indication message. If it is determined that its own connection ID is included in the received base station traffic indication message, the subscriber station 1500 determines to transition to the awake mode, considering its own condition, and transmits a traffic confirm message with an AWAKE-APPROVED value being set to '1' to the base station 1550 in step 1527. Thereafter, the subscriber station 1500 transitions to the awake mode after a lapse of a time indicated by a START-TIME value extracted from the base station traffic indication message in step 1543.

Upon receiving the traffic confirm message, the base station 1550 detects the transition to the awake mode of the corresponding subscriber station, and does not include a connection ID of the subscriber station 1500 in the base station traffic indication message until there is a packet to be transmitted to the subscriber station 1500.

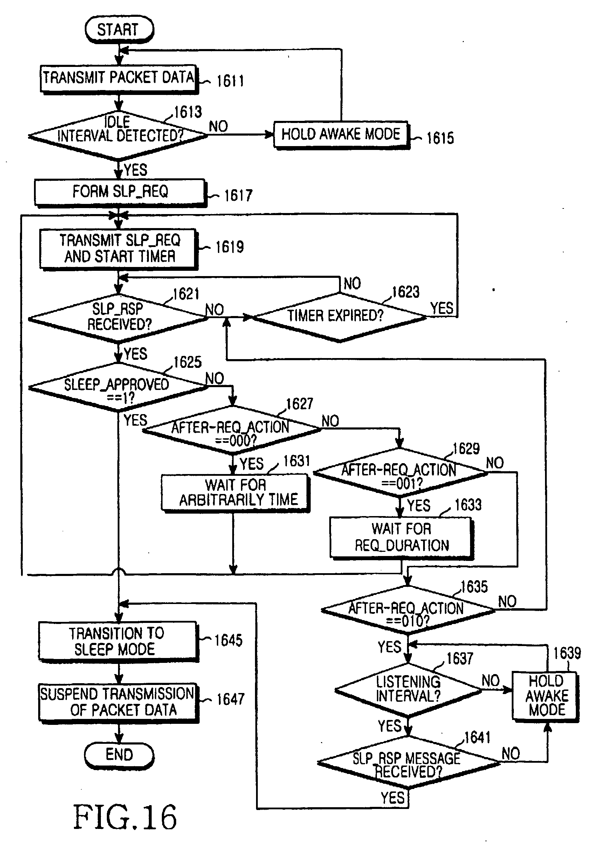

FIG 16 is a flowchart illustrating a state transition procedure to a sleep mode at the request of a subscriber station according to an embodiment of the present invention. Referring to FIG 16, in step 1611, the subscriber station transmits packet data in an awake mode. In step 1613, the subscriber station determines whether an idle interval in which there is no transmission packet data is detected during transmission of the packet data. If it is determined that the idle interval is not detected, the subscriber station proceeds to step 1615, where the subscriber station holds the current awake mode and then returns to step 1611.

However, if it is determined in step 1613 that the idle interval is detected, the subscriber station proceeds to step 1617. In step 1617, the subscriber station forms a sleep request message to be transmitted to a base station, determining that it should transition to the sleep mode because of the detection of the idle interval.

In step 1619, the subscriber station transmits the formed sleep request message to a base station to which the subscriber station is connected. At the same time, the subscriber station starts driving a timer used for waiting for a sleep response message to the sleep request message. Here, the timer is started at the instant that the sleep request message is transmitted, and is driven only for a predetermined time.

In step 1621, the subscriber station determines whether the sleep response message is received from the base station. If it is determined that the sleep response message is not received from the base station, the subscriber station proceeds to step 1623. In step 1623, the subscriber station determines whether the timer has expired.

If it is determined that the timer has not expired, the subscriber station returns to step 1621. However, if it is determined that the timer has expired, the subscriber station returns to step 1619 where it retransmits a sleep request message, determining that the transmitted sleep request message has not been normally transmitted to the base station.

If it is determined in step 1621 that the sleep response message has been received from the base station, the subscriber station proceeds to step 1625. In step 1625, the subscriber station determines whether a SLEEP-APPROVED value in the sleep response message is '1', i.e., determines whether the base station has approved the transition to the sleep mode of the subscriber station. If it is determined that the SLEEP-APPROVED value is '1', the subscriber station proceeds to step 1645.

However, if it is determined that the SLEEP-APPROVED value is not '1', the subscriber station proceeds to step 1627 to perform an AFTER-REQ_ACTION operation because the transition to the sleep mode, requested by the subscriber station, was denied by the base station. In step 1627, the subscriber station determines whether an AFTER-REQ_ACTION value in the sleep response message is '000'. If it is determined that the AFTER-REQ_ACTION value is '000, the subscriber station proceeds to step 1631. In step 1631, the subscriber station, determining that the AFTER-REQ_ACTION value is '000', waits for a arbitrarily determined time because it should retransmit a sleep request message after a lapse of a arbitrarily determined time due to the AFTER-REQ_ACTION value of '000', and then returns to step 1619 where it retransmits a sleep request message to the base station.

If it is determined in step 1627 that the AFTER-REQ_ACTION value is not '000', the subscriber station proceeds to step 1629. In step 1629, the subscriber station determines whether the AFTER-REQ_ACTION value is '001'. If it is determined that the AFTER-REQ_ACTION value is '001', the subscriber station proceeds to step 1633. In step 1633, the subscriber station, determining that the AFTER-REQ_ACTION value is '001', waits for REQ_DURATION because it should retransmit the sleep request message after a lapse of a fixed time, i.e., REQ_DURATION informed by the base station through a sleep response message, due to the AFTER-REQ_ACTION of '001', and then returns to step 1619, where it retransmits the sleep request message.
If it is determined in step 1629 that the AFTER-REQ_ACTION value is not '001', the subscriber station proceeds to step 1635. In step 1635, the subscriber station determines whether the AFTER-REQ_ACTION value is '010'. If it is determined that the AFTER-REQ_ACTION value is not '010', the subscriber station disregards the sleep response message because it is defective, and then returns to step 1623 where it waits for the next sleep response message. Otherwise, if it is determined in step 1635 that the AFTER-REQ_ACTION value is '010', the subscriber station proceeds to step 1637,where the subscriber station determines whether it is a listening interval. If it is not the listening interval, the subscriber station proceeds to step 1639 where it holds the awake mode and then repeats step 1637. However, if it is determined in step 1637 that it is the listening interval, the subscriber station proceeds to step 1641.

In step 1641, as it perceives that the AFTER-REQ_ACTION value is '010', the subscriber station waits for the listing interval without retransmitting the sleep request message any longer until a sleep response message transmitted by the base station is received. Therefore, in step 1641, the subscriber station determines whether a sleep response message transmitted by the base station has been received. It is determined that the sleep response message has not been received, the subscriber station returns to step 1639. In step 1639, the subscriber station continuously stays in the awake mode and proceeds to step 1637 where it waits for a sleep response message for the listening interval.

If it is determined in step 1641 that the sleep response message transmitted by the base station is received, the subscriber station proceeds to step 1645. In step 1645, the subscriber station transitions to the sleep mode. In step 1647, the subscriber station suspends transmission of packet data and then ends the procedure.

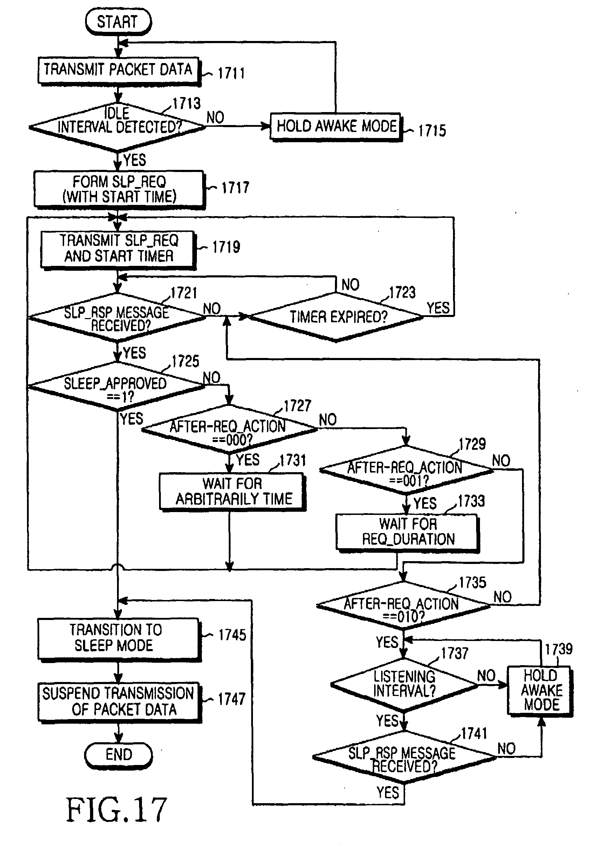

FIG 17 is a flowchart illustrating a state transition procedure to a sleep mode at the request of a base station according to an embodiment of the present invention. The state transition procedure to a sleep mode at the request of a base station is identical to the procedure of FIG 16 except the information elements constituting the sleep request message. Therefore, only the differences between the two figures will be described herein below.

As indicated above, a procedure for allowing, by the base station, the subscriber station to make a transition to the sleep mode is identical to the corresponding procedure of FIG 16. However, the only difference is that unlike in step 1617 of FIG 16, in step 1717 of FIG 17, a START-TIME value indicating a time at which the subscriber station should make a state transition to the sleep mode is included in a sleep request message transmitted to the subscriber station by the base station.

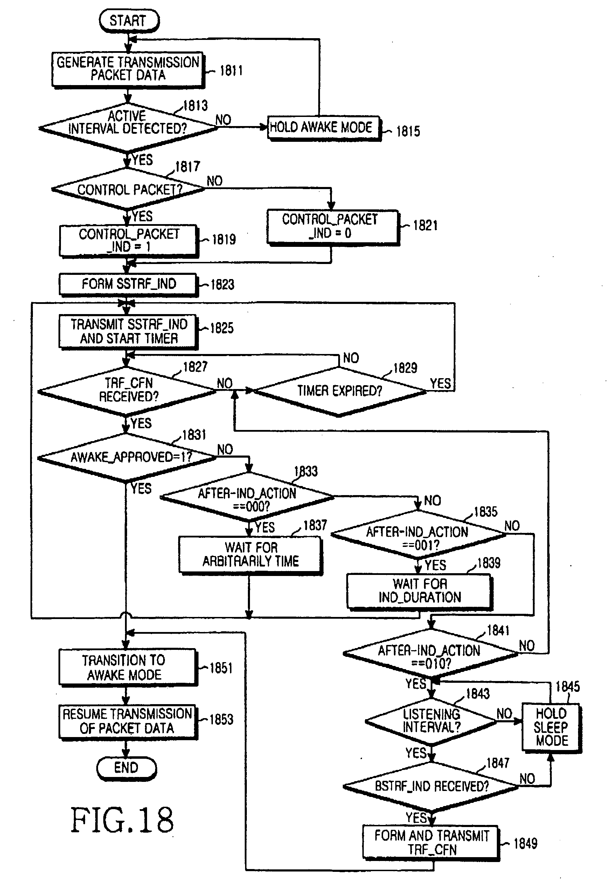

FIG 18 is a flowchart illustrating a state transition procedure to an awake mode at the request of a subscriber station according to an embodiment of the present invention. Referring to FIG 18, if the subscriber station in a sleep mode detects generation of packet data to be transmitted to a base station in a packet data session in step 1811, the subscriber station proceeds to step 1813. In step 1813, the subscriber station determines whether an active interval in which there is transmission packet data is detected. If it is determined that the active interval is not detected, i.e., if an idle interval is detected, the subscriber station proceeds to step 1815.

In step 1815, the subscriber station holds the current sleep mode and then returns to step 1811. However, if it is determined in step 1813 that the active interval is detected, the subscriber station proceeds to step 1817. In step 1817, the subscriber station determines whether a first packet to be transmitted to the base station is a control packet, determining that it should transition to an awake mode as the active interval is detected. If it is determined that the first packet is a control packet, the subscriber station proceeds to step 1819, and otherwise, the subscriber station proceeds to step 1821.

In step 1819, as it is found that the first packet to be transmitted to the base station is a control packet, the subscriber station sets a CONTROL_PACKET_IND value in a subscriber station traffic indication message is set to '1' so that a state transition to the awake mode should not be denied, and then proceeds to step 1823. However, in step 1821, as it is found that the first packet to be transmitted to the base station is a user data packet, the subscriber station sets the CONTROL_PACKET_IND value to '0' so as to allow the base station to determine whether to approve a transition to the awake mode of the subscriber station, and then proceeds to step 1823. In step 1823, the subscriber station forms a subscriber station traffic indication message containing the CONTROL_PACKET_IND value, and then proceeds to step 1825.

In step 1825, the subscriber station transmits the formed subscriber station traffic indication message to a base station to which the subscriber station is connected. Additionally, at the same time, the subscriber station starts driving a timer used for waiting for a traffic confirm message corresponding to the subscriber station traffic indication message. Here, the timer is started at the instant that the subscriber station traffic indication message is transmitted, and is driven only for a predetermined time.

In step 1827, the subscriber station determines whether the traffic confirm message is received from the base station. If it is determined in step 1827 that the traffic confirm message is not received from the base station, the subscriber station proceeds to step 1829, where the subscriber station determines whether the timer has expired. If it is determined that the timer has not expired, the subscriber station returns to step 1827.

However, if it is determined that the timer has expired, the subscriber station returns to step 1825, where it retransmits a subscriber station traffic indication message, determining that the transmitted subscriber station traffic indication message has not been normally transmitted to the base station. However, if it is determined in step 1827 that the traffic confirm message has been received from the base station, the subscriber station proceeds to step 1831.

In step 1831, the subscriber station determines whether an AWAKE-APPROVED value in the traffic confirm message is '1', i.e., determines whether the base station has approved the transition to the awake mode of the subscriber station. If it is determined that the AWAKE-APPROVED value is '1', the subscriber station proceeds to step 1851.

However, if it is determined that the AWAKE-APPROVED value is not '1', the subscriber station proceeds to step 1833 to perform an AFTER-IND_ACTION operation because the transition to the awake mode, requested by the subscriber station, was denied by the base station. In step 1833, the subscriber station determines whether an AFTER-IND_ACTION value in the traffic confirm message is '000'. If it is determined that the AFTER-IND_ACTION value is '000, the subscriber station proceeds to step 1837.

In step 1837, as it is found that the AFTER-IND_ACTION value is '000', the subscriber station waits for a arbitrarily determined time because it should retransmit a subscriber station traffic indication message after a lapse of a arbitrarily determined time, and then returns to step 1825, where it retransmits a subscriber station traffic indication message to the base station.

If it is determined in step 1833 that the AFTER-IND _ACTION value is not '000', the subscriber station proceeds to step 1835.

In step 1835, the subscriber station determines whether the AFTER-IND_ACTION value is '001'. If it is determined that the AFTER-IND_ACTION value is '001', the subscriber station proceeds to step 1839, where the subscriber station waits for IND_DURATION because it should retransmit the subscriber station traffic indication message after a lapse of a fixed time, i.e., IND_DURATION informed by the base station through a traffic confirm message, and then returns to step 1825, where it retransmits the subscriber station traffic indication message.

However, if it is determined in step 1835 that the AFTER-IND_ACTION value is not '001', the subscriber station proceeds to step 1841. In step 1841, the subscriber station determines whether the AFTER-IND ACTION value is '010'. If it is determined that the AFTER-IND_ACTION value is not '010', the subscriber station disregards the traffic confirm message because it is defective, and then returns to step 1829, where it waits for the next traffic confirm message. However, if it is determined in step 1841 that the AFTER-IND _ACTION value is '010', the subscriber station proceeds to step 1843.

In step 1843, the subscriber station determines whether it is a listening interval. If it is not the listening interval, the subscriber station proceeds to step 1845, where it holds the sleep mode and then repeats step 1843. However, if it is determined in step 1843 that it is the listening interval, the subscriber station proceeds to step 1847.

In step 1847, as it is determined that the AFTER-IND_ACTION value is '010', the subscriber station wakes up from the listening interval and waits until a base station traffic indication message transmitted by the base station is received, without retransmitting the subscriber station traffic indication message any longer.

Therefore, in step 1847, the subscriber station determines whether the base station traffic indication message has been received. If it is determined that the base station traffic indication message has not been received, the subscriber station proceeds to step 1845. However, if it is determined in step 1847 that the base station traffic indication message transmitted by the base station has been received, the subscriber station proceeds to step 1849.

In step 1849, the subscriber station transmits a traffic confirm message corresponding to the base station traffic indication message to the base station, and then proceeds to step 1851. In step 1851, the subscriber station transitions from the sleep mode to the awake mode, and then proceeds to step 1853. In step 1853, as the subscriber station transitions to the awake mode, it resumes transmission of packet data, suspended in the sleep mode.

As should be understood from the forgoing description, the present invention supports sleep mode and awake mode operations of an OFDM/OFDMA broadband wireless access communication system, or an IEEE 802.16e communication system. Advantages of the sleep mode and awake mode operations according to the present invention will be described in detail herein below.
(1) When a subscriber station requests a state transition to a sleep mode, a base station should inform the subscriber station whether it will approve the transition request. If there is data to be transmitted to the subscriber station, the base station can deny the transition to the sleep mode requested by the subscriber station. Therefore, the subscriber station continuously holds the awake mode, causing unnecessary power consumption. However, the present invention employs an algorithm for allowing the subscriber station to make again a transition request to the sleep mode when the transition request to the sleep mode of the subscriber station was denied, thereby enabling the state transition to the sleep mode of the subscriber station.
(2) A subscriber station sends a transition request to an awake mode to a base station each time it detects presence of transmission data while it operates in a sleep mode. In this case, the base station can deny the transition request to the awake mode of the subscriber station for the following reasons.
   - Efficient Utilization of Base Station's Capacity: The base station can previously prevent an excess of its capacity.
   - Load Balancing on Subscriber Station's Traffic: The base station suppresses the transition to the awake mode of a subscriber station having a high packet transmission rate to the base station, thereby increasing packet transmission opportunities of other subscriber stations. Alternatively, the base station can increase the entire transmission efficiency of packet data by preferentially considering the transition to the awake mode of the subscriber station having a high packet transmission rate.
   - Reliable Traffic Transmission by Subscriber Station in Awake Mode (QoS Guaranteed): The base station suppresses a transition to an awake mode of a subscriber station with relatively lower priority, thereby giving more packet data transmission opportunities to a subscriber station with higher priority.
   In the conventional technology, there has been no specific definition of a method for denying the transition request and an operation after the denial. Therefore, the subscriber station, from which a transition request to the awake mode is denied, continuously stays in the sleep mode. In order to resolve such a problem, the present invention defines an operation that the subscriber station should perform when the transition to the awake mode is defined, and parameters therefor, so the subscriber station can transition to the denied awake mode.
(3) A base station can send a transition request to the sleep mode to a subscriber station for the reason stated in (2). In the conventional technology, upon receiving the transition request to the sleep mode, the subscriber station transmits a response message to the transition request to the base station and then unconditionally transitions to the sleep mode. As a result, a control packet may be lost or may fail to be transmitted at an appropriate time, thereby affecting actual transmission of a user data packet. Therefore, if the subscriber station must transmit a packet of important information, the subscriber station should be able to deny the request of the base station. The present invention enables even the subscriber station to deny a transition request to the sleep mode of the base station, contributing to rapid and safe transmission of control information necessary for reliable transmission of user data.
(4) When a base station requests a subscriber station staying in a sleep mode to make a transition to an awake mode, the subscriber station should be able to deny the request of the base station according to its remaining battery power. If current battery power of the subscriber station is almost exhausted, such that no more packet transmission/reception is available, the subscriber station can deny the transition request to the awake mode of the base station, thus preventing a possible misoperation due to low battery power.

While the present invention has been shown and described with reference to certain preferred embodiments thereof, it will be understood by those skilled in the art that various changes in form and details may be made therein without departing from the spirit and scope of the present invention as defined by the appended claims.

**The following is a list of further preferred embodiments of the invention:**
Embodiment 1: A method for controlling a sleep mode by a subscriber station in an awake mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of:
   if a denial response of the base station to a sleep request from the subscriber station to the base station is received, retransmitting the sleep request to the base station after a lapse of waiting duration; or
   if a denial response of the base station to the sleep request from the subscriber station to the base station is received, holding retransmission of the sleep request to the base station until an unsolicited response to the sleep request is received from the base station.
Embodiment 2: The method of embodiment 1, wherein the waiting duration is a fixed time for which the subscriber station should wait to retransmit the sleep request.
Embodiment 3: A method for controlling a sleep mode by a base station, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of:
   if a denial response of the subscriber station to a sleep request from the base station to the subscriber station is received, retransmitting a sleep request to the subscriber station after a lapse of waiting duration; or
   if a denial response of the subscriber station to a sleep request from the base station to the subscriber station is received, holding retransmission of the sleep request to the subscriber station until an unsolicited response to the sleep request is received from the subscriber station.
Embodiment 4: The method of embodiment 3, wherein the waiting duration is a fixed time for which the base station should wait to retransmit the sleep request.
Embodiment 5: A method for controlling an awake mode by a subscriber station, upon transmitting a traffic indication for indicating a presence of traffic data to be transmitted from the subscriber station to the base station, while the subscriber station is in a sleep mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of:
   if a denial response of the base station to a traffic indication from the subscriber station to the base station is received, retransmitting the traffic indication to the base station after a lapse of waiting duration; or
   if a denial response from the base station to a traffic indication from the subscriber station to the base station is received, holding retransmission of the traffic indication until an unsolicited response to the traffic indication is received from the base station.
Embodiment 6: The method of embodiment 5, wherein if the unsolicited response to the traffic indication from the base station is received, the unsolicited response includes information on a start frame where the subscriber station is to transition to the awake mode.
Embodiment 7: The method of embodiment 5, wherein the unsolicited response includes packet data unit (PDU) number field information that the subscriber station has lastly received.
Embodiment 8: The method of embodiment 5, wherein the waiting duration is a fixed time for which the subscriber station should wait to retransmit the traffic indication.
Embodiment 9: The method of embodiment 5, wherein the traffic indication includes packet data unit(PDU) number field information that the subscriber station has lastly transmitted.
Embodiment 10: The method of embodiment 5, further comprising the steps of:
   determining by the subscriber station whether its own connection identifier (ID) exists in basic connection ID information included the traffic response; and
   if its own connection ID exists in the basic connection ID information, determining to transition to the awake mode.
Embodiment 11: The method of embodiment 5, wherein the traffic indication transmitted by the subscriber station includes information indicating a type of a transmission packet.
Embodiment 12: The method of embodiment 11, further comprising the step of immediately transitioning to the awake mode under the control of the base station, if the type of the transmission packet indicated by the traffic indication is a control packet.
Embodiment 13: A method for controlling an awake mode by a subscriber station upon receiving a traffic indication for indicating a presence of traffic data to be transmitted from a base station to the subscriber station, while the subscriber station is in a sleep mode, in a broadband wireless access communication system utilizing the sleep mode for minimizing power consumption of the subscriber station in an absence of data to be exchanged between the subscriber station and the base station, and the awake mode for enabling communication between the subscriber station and the base station in a presence of data to be exchanged between the subscriber station and the base station, comprising the steps of:
   receiving the traffic indication transmitted together with a connection identifier (ID) of the subscriber station by the base station;
   determining whether to approve a transition to the awake mode, considering a resource condition of the subscriber station; and
   transmitting the determination result to the base station.
Embodiment 14: The method of embodiment 13, wherein the traffic indication transmitted from the base station includes packet data unit (PDU) number field information that the subscriber station has lastly received.
Embodiment 15: The method of embodiment 13, wherein the traffic indication transmitted from the base station includes information on a start frame where the subscriber station is to transition to the awake mode.
Embodiment 16: The method of embodiment 13, wherein when the subscriber station approves the transition to the awake mode, the subscriber station transmits to the base station a response including a basic connection ID and information on PDU sequence number information that the subscriber station intends to receive.
Embodiment 17: A system for controlling a transition to a sleep mode from an awake mode, in a broadband wireless access communication system utilizing the sleep mode for minimizing power consumption in an absence of data to be exchanged, and the awake mode for enabling communication in a presence of data to be exchanged, comprising:
   a base station; and
   a subscriber station,
   wherein, if the base station receives a transition request to the sleep mode from the subscriber station, the base station transmits a denial response by transmitting waiting duration information to allow the subscriber station to retransmit the transition request to the sleep mode after a lapse of a waiting duration; and
   wherein, if the subscriber station receives the transition request to the sleep mode of the subscriber station from the base station, the subscriber station transmits a denial response by transmitting waiting duration information to allow the base station to retransmit a transition request to the sleep mode after a lapse of a waiting duration.
Embodiment 18: The system of embodiment 17, wherein the waiting duration is a fixed time for which the subscriber station should wait to retransmit the sleep request.
Embodiment 19: The system of embodiment 17, wherein the waiting duration is a fixed time for which the base station should wait to retransmit the sleep request.
Embodiment 20: The system of embodiment 17, wherein the sleep request response includes information on a start frame where the subscriber station is to transition to the sleep mode.
Embodiment 21: A system for controlling a transition to an awake mode from a sleep mode, in a broadband wireless access communication system utilizing the sleep mode for minimizing power consumption in an absence of data to be exchanged, and the awake mode for enabling communication in a presence of data to be exchanged, comprising:
   a base station; and
   a mobile station,
   wherein, if the base station receives a traffic indication for indicating a presence of a transmission packet from the subscriber station, the base station transmits a denial response by transmitting waiting duration information to allow the subscriber station to retransmit the traffic indication after a lapse of a waiting duration; and
   wherein if the subscriber station receives a traffic indication including a connection identifier (ID) of the subscriber station from the base station, the subscriber station determines whether to approve a transition to the awake mode, considering a resource condition thereof, and transmits the determination result to the base station.
Embodiment 22: The system of embodiment 21, wherein the waiting duration is a fixed time for which the subscriber station should wait to retransmit the sleep request.
Embodiment 23: The system of embodiment 21, wherein the traffic indication transmitted by the subscriber station includes PDU number field formation that the subscriber station has lastly transmitted.
Embodiment 24: The system of embodiment 21, wherein the subscriber station determines whether its own connection ID exists in basic connection ID information included in the traffic response, and determines to transition to the awake mode if its own connection ID exists in the basic connection ID information.
Embodiment 25: The system of embodiment 21, wherein the traffic indication transmitted by the subscriber station includes information indicating a type of a transmission packet.
Embodiment 26: The system of embodiment 25, wherein if the type of the transmission packet indicted by the traffic indication transmitted by the subscriber station is a control packet, the subscriber station immediately transitions to the awake mode under a control of the base station.
Embodiment 27: The system of embodiment 21, wherein the traffic indication transmitted by the base station includes packet data unit (PDU) number field information that the subscriber station has lastly received.
Embodiment 28: The system of embodiment 21, wherein the traffic indication transmitted by the base station includes information on a start frame where the subscriber station is to transition to the awake mode.
Embodiment 29: The system of embodiment 21, wherein when the subscriber station has determined to transition to the awake mode, the subscriber station transmits to the base station a response including a basic connection ID and information on a PDU sequence number that the subscriber station intends to receive.
Embodiment 30: A system for controlling a transition to a sleep mode from an awake mode, in a broadband wireless access communication system utilizing the sleep mode for minimizing power consumption in an absence of data to be exchanged, and the awake mode for enabling communication in a presence of data to be exchanged, comprising:
   a base station; and
   a subscriber station,
   wherein the base station, upon receiving a transition request to the sleep mode of the subscriber station, transmits a denial response by allowing the subscriber station not to transmit a sleep request until a response to the transition request to the sleep mode is re-received; and
   wherein the subscriber station, upon receiving a transition request to the sleep mode of the subscriber station from the base station, transmitting a denial response by allowing the base station not to transmit a sleep request until a response to the transition request to the sleep mode is re-received.
Embodiment 31: A system for controlling a transition to an awake mode from a sleep mode, in a broadband wireless access communication system utilizing the sleep mode for minimizing power consumption in an absence of data to be exchanged, and the awake mode for enabling communication in a presence of data to be exchanged, comprising:
   a base station; and
   a mobile station,
   wherein, if the base station receives a traffic indication indicating presence of a transmission packet from the subscriber station, the base station transmits a denial response by allowing the subscriber station not to transmit a traffic indication until a response to the traffic indication is re-received; and
   wherein if the subscriber station receives a traffic indication including a connection identifier (ID) of the subscriber station from the base station, the subscriber station determines whether to approve a transition to the awake mode considering a resource condition thereof, and transmits the determination result to the base station.
Embodiment 32: The system of embodiment 31, wherein the response to the traffic indication retransmitted from the base station to the subscriber station includes information on a start frame where the subscriber station is to transition to the awake mode.
Embodiment 33: The system of embodiment 31, wherein the response to the traffic indication includes information on packet data unit (PDU) field information that the subscriber station has lastly received.

### Important Note:

While the attached claims relate to a preferred aspect of the present invention, the applicant wishes to reserve the right to file one or several further divisional applications at a later point in time for other aspects disclosed in the application. Those further applications will be divided out from the present divisional application. By this statement, the public is herewith informed that more divisional applications relating to different subject matter may follow.

## Claims

1. A method for controlling an awake mode by a subscriber station in a communication system, comprising the steps of:
transmitting a traffic indication message to a base station;
receiving a traffic confirm message from the base station;
detecting a disapproval of the traffic indication message based on the traffic confirm message; and
detecting a waiting duration for re-transmission of the traffic indication message.

2. The method of claim 1, further comprising the step of:
retransmitting the traffic indication message to the base station after waiting for a period corresponding to the waiting duration from the time at the receipt of the traffic confirm message.

3. A method for controlling an awake mode by a base station in a communication system, comprising the steps of:
receiving a traffic indication message from a subscriber station;
determining a disapproval of the traffic indication message; and
transmitting a traffic confirm message to the subscriber station,
wherein the traffic confirm message includes a waiting duration for retransmission of the traffic indication message.

4. The method of claim 3, further comprising the step of:
receiving the traffic indication message from the subscriber station after the waiting duration.

5. A method for controlling an awake mode by a subscriber station in a communication system, comprising the steps of:
transmitting a traffic indication message to a base station;
receiving a traffic confirm message from the base station;
detecting a disapproval of the traffic indication message based on the sleep response message; and
holding off retransmission of the traffic indication message to the base station until an unsolicited traffic confirm message to the traffic indication message is received from the base station.

6. The method of claim 5, further comprising the step of:
retransmitting the traffic indication message to the base station after receipt of the unsolicited traffic confirm message.

7. A method for controlling an awake mode by a base station in a communication system, comprising the steps of:
receiving a traffic indication message from a subscriber station;
determining a disapproval of the traffic indication message;
transmitting a traffic confirm message to the subscriber station; and
retransmitting the traffic confirm message to the subscriber station,
wherein the subscriber station holds off until the base station retransmits the traffic confirm message to the traffic indication message by the base station, without retransmitting the traffic indication message.

8. A method for controlling an awake mode by a subscriber station in a broadband wireless access communication system, comprising the steps of:
if a denial response of a base station to a traffic indication from a subscriber station to the base station is received, retransmitting the traffic indication to the base station after a lapse of waiting duration; or
if a denial response from the base station to a traffic indication from the subscriber station to the base station is received, holding off retransmission of the traffic indication until an unsolicited response to the traffic indication is received from the base station.

9. The method of claim 8, wherein if the unsolicited response to the traffic indication from the base station is received, the unsolicited response includes information on a start frame where the subscriber station is to transition to the awake mode.

10. The method of claim 8, wherein the unsolicited response includes packet data unit (PDU) number field information that the subscriber station has lastly received.

11. The method of claim 8, wherein the waiting duration is a time for which the subscriber station should wait to retransmit the traffic indication.

12. The method of claim 8, wherein the traffic indication includes packet data unit (PDU) number field information that the subscriber station has lastly transmitted.

13. The method of claim 8, further comprising the steps of:
determining by the subscriber station whether its own connection identifier (ID) exists in basic connection ID information included in the traffic response; and
if its own connection ID exists in the basic connection ID information, determining to transition to the awake mode.

14. The method of claim 8, wherein the traffic indication transmitted by the subscriber station includes information indicating a type of a transmission packet.

15. The method of claim 14, further comprising the step of immediately transitioning to the awake mode under the control of the base station, if the type of the transmission packet indicated by the traffic indication is a control packet.

16. A method for controlling an awake mode by a subscriber station in a broadband wireless access communication system, comprising the steps of:
receiving a traffic indication transmitted together with a connection identifier (ID) of the subscriber station by the base station;
determining whether to approve a transition to awake mode, considering a resource condition of the subscriber station; and
transmitting the determination result to the base station.

17. The method of claim 16, wherein the traffic indication transmitted from the base station includes packet data unit (PDU) number field information that the subscriber station has lastly received.

18. The method of claim 16, wherein the traffic indication transmitted from the base station includes information on a start frame where the subscriber station is to transition to the awake mode.

19. The method of claim 16, wherein when the subscriber station approves the transition to the awake mode, the subscriber station transmits to the base station a response including a basic connection ID and information on PDU sequence number information that the subscriber station intends to receive.

20. A system for controlling a transition of a subscriber station to a sleep mode from an awake mode, in a broadband wireless access communication system utilizing the sleep mode for minimizing power consumption in an absence of data to be exchanged, and the awake mode for enabling communication in a presence of data to be exchanged, comprising:
a base station; and
a subscriber station,
wherein, if the base station receives a transition request to the sleep mode from the subscriber station, the base station transmits a denial response by transmitting waiting duration information to allow the subscriber station to retransmit the transition request to the sleep mode after a lapse of a waiting duration; and
wherein, if the subscriber station receives the transition request to the sleep mode of the subscriber station from the base station, the subscriber station transmits a denial response by transmitting waiting duration information to allow the base station to retransmit a transition request to the sleep mode after a lapse of a waiting duration.

21. The system of claim 20, wherein the waiting duration is a time for which the subscriber station should wait to retransmit the sleep request.

22. The system of claim 20, wherein the waiting duration is a time for which the base station should wait to retransmit the sleep request.

23. The system of claim 20, wherein the sleep request response includes information on a start frame where the subscriber station is to transition to the sleep mode.

24. A system for controlling a transition of a subscriber station to an awake mode from a sleep mode, in a broadband wireless access communication system utilizing the sleep mode for minimizing power consumption in an absence of data to be exchanged, and the awake mode for enabling communication in a presence of data to be exchanged, comprising:
a base station; and
a mobile station,
wherein, if the base station receives a traffic indication for indicating a presence of a transmission packet from the subscriber station, the base station transmits a denial response by transmitting waiting duration information to allow the subscriber station to retransmit the traffic indication after a lapse of a waiting duration; and
wherein if the subscriber station receives a traffic indication including a connection identifier (ID) of the subscriber station from the base station, the subscriber station determines whether to approve a transition to the awake mode, considering a resource condition thereof, and transmits the determination result to the base station.

25. The system of claim 24, wherein the waiting duration is a time for which the subscriber station should wait to retransmit the sleep request.

26. The system of claim 24, wherein the traffic indication transmitted by the subscriber station includes PDU number field formation that the subscriber station has lastly transmitted.

27. The system of claim 24, wherein the subscriber station determines whether its own connection ID exists in basic connection ID information included in the traffic response, and determines to transition to the awake mode if its own connection ID exists in the basic connection ID information.

28. The system of claim 24, wherein the traffic indication transmitted by the subscriber station includes information indicating a type of a transmission packet.

29. The system of claim 28, wherein if the type of the transmission packet indicated by the traffic indication transmitted by the subscriber station is a control packet, the subscriber station immediately transitions to the awake mode under a control of the base station.

30. The system of claim 24, wherein the traffic indication transmitted by the base station includes packet data unit (PDU) number field information that the subscriber station has lastly received.

31. The system of claim 24, wherein the traffic indication transmitted by the base station includes information on a start frame where the subscriber station is to transition to the awake mode.

32. The system of claim 24, wherein when the subscriber station has determined to transition to the awake mode, the subscriber station transmits to the base station a response including a basic connection ID and information on a PDU sequence number that the subscriber station intends to receive.

33. A system for controlling a transition of a subscriber station to a sleep mode from an awake mode, in a broadband wireless access communication system utilizing the sleep mode for minimizing power consumption in an absence of data to be exchanged, and the awake mode for enabling communication in a presence of data to be exchanged, comprising:
a base station; and
a subscriber station,
wherein the base station, upon receiving a transition request to the sleep mode of the subscriber station, transmits a denial response by allowing the subscriber station not to transmit a sleep request until a response to the transition request to the sleep mode is re-received; and
wherein the subscriber station, upon receiving a transition request to the sleep mode of the subscriber station from the base station, transmitting a denial response by allowing the base station not to transmit a sleep request until a response to the transition request to the sleep mode is re-received.

34. A system for controlling a transition of a subscriber station to an awake mode from a sleep mode, in a broadband wireless access communication system utilizing the sleep mode for minimizing power consumption in an absence of data to be exchanged, and the awake mode for enabling communication in a presence of data to be exchanged, comprising:
a base station; and
a mobile station,
wherein, if the base station receives a traffic indication indicating presence of a transmission packet from the subscriber station, the base station transmits a denial response by allowing the subscriber station not to transmit a traffic indication until a response to the traffic indication is re-received; and
wherein if the subscriber station receives a traffic indication including a connection identifier (ID) of the subscriber station from the base station, the subscriber station determines whether to approve a transition to the awake mode considering a resource condition thereof, and transmits the determination result to the base station.

35. The system of claim 34, wherein the response to the traffic indication retransmitted from the base station to the subscriber station includes information on a start frame where the subscriber station is to transition to the awake mode.

36. The system of claim 34, wherein the response to the traffic indication includes information on packet data unit (PDU) field information that the subscriber station has lastly received.
